# EUROPEAN PATENT SPECIFICATION

(11) **EP 4 293 769 B1**
(45) Date of publication and mention of the grant of the patent: **29.04.2026**
(21) Application number: 22860450.0
(22) Date of filing: 22.08.2022
(51) Int. Cl.: H01M 50/107, H01M 50/14, H01M 50/152, H01M 50/172, H01M 50/179, H01M 50/503, H01M 50/514, H01M 50/547, H01M 50/552, H01M 50/559, H01M 10/04

(54) **BATTERY CELL, BATTERY, AND ELECTRICAL APPARATUS**
BATTERIEZELLE, BATTERIE UND ELEKTRISCHES GERÄT
CELLULE DE BATTERIE, BATTERIE ET APPAREIL ÉLECTRIQUE

(30) Priority: 23.08.2021 WO PCT/CN2021/114156; 23.08.2021 WO PCT/CN2021/114155
(43) Date of publication of application: 20.12.2023
(60) Divisional application: 26158616.8
(73) Proprietor: Contemporary Amperex Technology (Hong Kong) Limited, Central, Central And Western District (HK)
(72) Inventor: ZHOU, Wenlin, Ningde, Fujian 352100 (CN); CHEN, Long, Ningde, Fujian 352100 (CN); ZHENG, Yulian, Ningde, Fujian 352100 (CN); LI, Quankun, Ningde, Fujian 352100 (CN); WANG, Peng, Ningde, Fujian 352100 (CN); GUO, Zhijun, Ningde, Fujian 352100 (CN)
(74) Representative: Rowlands, Stuart Michael
(86) International application number: PCT/CN2022/114022
(87) International publication number: WO 2023/025104

(56) References cited:
- EP-A1- 4 152 492
- CN-A- 111 430 588
- CN-A- 112 821 015
- CN-U- 202 487 702
- CN-U- 204 067 497
- CN-U- 206 619 636
- US-A- 5 677 078
- US-A- 5 677 078

## Description

### Technical Field

The present application relates to the technical field of batteries, and more particularly to a battery cell, a battery, and an electrical apparatus.

### Background Art

Battery cells are widely used in electronic devices, such as mobile phones, laptop computers, battery vehicles, electric vehicles, electric planes, electric ships, electric toy cars, electric toy ships, electric toy planes, and electric tools. The battery cells may include nickelcadmium battery cells, nickel-hydrogen battery cells, lithium-ion battery cells, secondary alkaline zinc-manganese battery cells, and the like.

How to improve the safety of battery cells is one of the research directions in battery technologies.

US5677078A discloses an electrochemical cell and a method of manufacturing the same. Plates of opposite polarity are wound spirally and end connectors with protruding hubs are attached to each end. Elastomeric sleeves are fitted around both of the hubs. The assembly is placed within a casing having a jacket and an end with a hole through it, whereby one end connector hub and its associated sleeve extends through the casing end hole. The end connector hub is radially expanded against the sleeve by installing a blind rivet in the end connector hub, thereby causing the sleeve to radially expand into the casing. A casing cover having a hole through it is placed on the other end. A blind rivet similarly expands the end connector hub into its sleeve, and the sleeve is expanded into the cover. The plates may be of the very thin type, and the end connectors may be attached by casting them onto the thin plates.

CN202487702U discloses a recyclable battery and relates to a battery. The recyclable battery is used for solving the problem that an existing disposable battery packaging structure cannot be recycled. The cathode assembly of the recyclable battery provided by the utility model consists of a current-conducting rod, a cathode cover and a cathode connecting sleeve which are integrally manufactured, wherein the current-conducting rod and cathode connecting sleeve on the cathode assembly are arranged in an anode shell; the inner wall of the cathode connecting sleeve is provided with a thread; the cathode cover is positioned at an opening on the bottom of the anode shell; a gasket assembly consists of a gasket and a gasket connecting sleeve; the gasket connecting sleeve is vertically arranged at the lower end surface of the gasket; the outer wall of the gasket is provided with a thread; the gasket assembly is arranged in the anode shell and the gasket is sleeved on the current-conducting rod; the gasket connecting sleeve is in threaded connection with the cathode connecting sleeve; and a rubber sealing ring is arranged between the cathode cover and the gasket and is sleeved on the cathode connecting sleeve. The recyclable battery provided by the utility model can be recycled.

CN204067497U discloses a kind of big column lithium battery, comprise aluminum hull, battery bag, upper collector, next part fluid, cover plate assembly, it is characterized in that: described aluminum hull inside is the large cavity being closed one end open by the one-time formed one end of cold extruding technique, large cavity inside is provided with battery bag, the two ends up and down of battery bag are respectively equipped with collector and next part fluid, cover plate assembly has been bolted above the kink of described upper collector, the edge of described cover plate assembly is provided with a circle step one, the side of cover plate assembly is provided with venting, venting upper, lower surface respectively has a circular step caved inward two, each step two place respectively seals and is provided with a rupture pressure disc. The utility model structure is simple, have cost low, connect reliable, the life-span is long, sealing and the good advantage of explosion-proof effect.

CN206619636U discloses a kind of battery, conflux piece, insulation spacer and block including shell, battery core, central tube, conflux with the positive pole of Positive Poles one piece, negative pole, the shell includes the cylinder portion of hollow cylindrical and circular bottom wall, open at one end, the other end of cartridge are connected with the bottom wall, the center of the bottom wall is provided with circular through hole, the Positive Poles are welding as one provided with external screw thread and through the through hole with shell; The insulation spacer entangles battery core negative pole end, second lateral margin of insulation spacer can fully avoid the risk of both positive and negative polarity short circuit, shell is handled along a face slot rolling of the insulation spacer away from battery core, both positive and negative polarity is fixed, dual prevent battery core play, block usage amount is reduced simultaneously, reduces welding times, reduction housing cost and weight, technique advantages of simple, is conducive to Automated assembly.

CN112821015A discloses a copper-aluminum composite pole, a negative electrode cover plate assembly structure and an energy storage unit. The pole of the negative pole component adopts the copper-aluminum transition component, the aluminum material part at the upper part of the pole adopts the aluminum material, the welding performance is good, the welding with the monomer of the module is more facilitated by using the aluminum sheet, the copper material part at the lower part of the pole adopts the copper material, the copper material part is contacted with the electrolyte in the energy storage element for conducting electricity, the conductivity is good, and the electrochemical corrosion can not occur.

EP4152492A1 discloses a battery including a case and a cap plate. The case is a cylindrical groove structure, a top end face, facing towards the case, of the cap plate is provided with an annular protrusion, the annular protrusion has a central axis coinciding with the central axis of the cap plate, an edge of the top end face of the cap plate is provided with a first welding platform face, the first welding platform face is arranged circumferentially around the annular protrusion, and an outer sidewall of the annular protrusion and the first welding platform face constitute a stepped face. The annular protrusion enters the interior of the case via an annular bottom end face of the case, and the annular bottom end face of the case is in contact with the first welding platform face and connected to the first welding platform face by laser welding.

CN111430588 A relates to a shell assembly of a button battery, a button battery and an electronic product.

### Summary of the Invention

The present invention is defined by the features of the independent claim. Preferred embodiments are given in the dependent claims.

The present application provides a battery cell, a battery, and an electrical apparatus, which can improve the safety of the battery cell.

In a first aspect, an embodiment of the present application provides a battery cell, including a case, an electrode assembly, a first electrode terminal, and a cover plate. The case includes a cylinder and a cover body that are integrally formed, and the cylinder has an opening at the end facing away from the cover body. The electrode assembly is accommodated in the case and includes a first tab. The first electrode terminal is arranged on the cover body and is configured for electrical connection with the first tab. The cover plate is connected to the cylinder and covers the opening.

In the above technical solution, the first electrode terminal is mounted to the cover body and the cover plate covers the opening of the cylinder, which can increase a distance between a joint between the cylinder and the cover plate and the first electrode terminal, so as to reduce an effect on the joint between the cylinder and the cover plate when the battery cell is subjected to external impact, reduce a risk of failure of the connection between the cover plate and the case, reduce leakage of an electrolyte solution, and improve the safety.

In some embodiments, the cover plate is welded to the cylinder.

In the above technical solution, welding can not only realize the connection between the cover plate and the cylinder, but also improve airtightness of the joint between the cover plate and the cylinder. The first electrode terminal is mounted to the cover body, which can increase a distance between a weld between the cylinder and the cover plate and the first electrode terminal, so as to reduce an effect on the weld between the cover plate and the cylinder when the first electrode terminal is pulled by external force. Therefore, a risk of cracking at the weld between the cover plate and the cylinder is reduced, and the airtightness is improved.

In some embodiments, the cover plate is in sealing connection with the cylinder through a sealing member.

In the above technical solution, by arranging the sealing member between the cover plate and the cylinder, the airtightness of the battery cell can be improved.

In some embodiments, the first electrode terminal is configured for connection with a first convergence component of a battery. The first electrode terminal serves as an output electrode of the battery cell and may be connected to the first convergence component to facilitate electrical connections between battery cells.

When the battery cell is subjected to external impact, the first convergence component may pull the first electrode terminal. In the above technical solution, the first electrode terminal is arranged on the cover body away from the cover plate to increase the distance between the joint between the cylinder and the cover plate and the first electrode terminal, so as to reduce an effect on the joint between the cylinder and the cover plate when the battery cell is subjected to the external impact, reduce a risk of failure of the connection between the cover plate and the case, reduce leakage of the electrolyte solution, and improve the safety.

In some embodiments, the electrode assembly further includes a second tab, the polarity of the second tab being opposite to that of the first tab. The battery cell further includes a second electrode terminal electrically connected to the second tab, the second electrode terminal being configured for connection with a second convergence component of the battery.

In the above technical solution, the first electrode terminal and the second electrode terminal may be used as two output electrodes of the battery cell, so as to realize electrical connection between the battery cell and an external circuit.

In some embodiments, the second electrode terminal is arranged on the cover body.

In the above technical solution, the first electrode terminal and the second electrode terminal are located at a same end of the battery cell, so that the first convergence component and the second convergence component can be assembled to a same side of the battery cell. In this way, an assembly process can be simplified, improving efficiency of assembling a plurality of battery cells into a group. The second electrode terminal is arranged on the cover body away from the cover plate to increase a distance between the joint between the cylinder and the cover plate and the second electrode terminal, so as to reduce an effect on the joint between the cylinder and the cover plate when the battery cell is subjected to external impact, reduce a risk of failure of the connection between the cover plate and the case, reduce leakage of the electrolyte solution, and improve the safety.

In some embodiments, both the first electrode terminal and the second electrode terminal protrude from an outer surface of the cover body, so as to reduce a risk of interference of the cover body with the convergence component and simplify a connection process of the convergence component and the electrode terminal.

In some embodiments, both the first electrode terminal and the second electrode terminal are insulated from the cover body.

In the above technical solution, the case is uncharged, thereby reducing a risk of electric leakage and improving safety.

In some embodiments, a base material of the case is aluminum.

In the above technical solution, the aluminum case has a lighter weight, which can increase energy density of the battery cell. The case is uncharged, so the aluminum case is not easily corroded by the electrolyte solution.

In some embodiments, the electrode assembly further includes a main body portion. Both the first tab and the second tab protrude from an end portion of the main body portion facing the cover body to reduce a distance between the first tab and the first electrode terminal and a distance between the second tab and the second electrode terminal.

In some embodiments, the electrode assembly further includes a second tab, the polarity of the second tab being opposite to that of the first tab. The cover body is electrically connected to the second tab, and the cover body is configured for connection with the second convergence component of the battery.

In the above technical solution, by using the cover body and the first electrode terminal as two output electrodes of the battery cell, the structure of the battery cell can be simplified, and overcurrent capability of the battery cell can be ensured. The first electrode terminal and the cover body are located at a same end of the battery cell, so that the first convergence component and the second convergence component can be assembled to a same side of the battery cell. In this way, an assembly process can be simplified, improving efficiency of assembling a plurality of battery cells into a group. The second convergence component is connected to the cover body, which can increase a distance between the joint between the cover plate and the cylinder and a joint between the second convergence component and the cover body, so as to reduce an effect on the joint between the cylinder and the cover plate when the battery cell is subjected to external impact, reduce a risk of failure of the connection between the cover plate and the case, reduce leakage of the electrolyte solution, and improve the safety.

In some embodiments, the first tab is arranged at the end of the electrode assembly facing the cover body, and the second tab is arranged at the end of the electrode assembly facing the cover plate. The cover body is electrically connected to the second tab through the cylinder.

In the above technical solution, the first tab and the second tab are respectively arranged at opposite ends of the electrode assembly, which can increase a distance between the first tab and the second tab, reduce a risk of conduction between the first tab and the second tab, and improve the safety. The electrical connection between the cover body and the second tab is realized through the cylinder, and a component connecting the cover body and the second tab can be omitted. Since the cover body and the cylinder are an integrated structure, resistance at the joint between the cover body and the cylinder is smaller, thereby improving the overcurrent capability.

In some embodiments, the second tab is a negative tab, and the base material of the case is steel.

The case is electrically connected to the negative tab, that is, the case is in a low potential state. In the above technical solution, the steel case is not easily corroded by the electrolyte solution in the low potential state.

In some embodiments, the cover body includes a body portion and a bending portion, the bending portion being integrally connected to the cylinder and the body portion.

In the above technical solution, the bending portion can release stress during the molding of the case, which reduces stress concentration and reduces a risk of rupture of the case.

In some embodiments, a thickness of the body portion is greater than a wall thickness of the cylinder.

In the above technical solution, the body portion with a larger thickness can better support members such as the first electrode terminal. When the first electrode terminal is pulled by external force, the body portion with the larger thickness is less deformed. The cylinder mainly separates the electrode assembly from the outside, which may have a relatively small thickness, thereby reducing an overall weight of the battery cell and increasing the energy density.

In some embodiments, the cover body includes an accommodating concave portion recessed from an outer surface of the body portion in a direction facing the electrode assembly. A bottom wall of the accommodating concave portion is provided with a first electrode lead-out hole, and the first electrode terminal is mounted in the first electrode lead-out hole.

In the above technical solution, by arranging the accommodating concave portion, a size of the first electrode terminal protruding from the outer surface of the body portion can be reduced, so as to reduce a maximum size of the battery cell and increase the energy density of the battery cell.

In some embodiments, the thickness D1 of the body portion and the wall thickness D2 of the cylinder satisfy: 0.1 mm≤D1-D2≤2 mm.

If D1-D2 is excessively small, the thickness of the body portion is rather small or the thickness of the cylinder is rather large. The rather small thickness of the body portion may lead to insufficient strength of the body portion. The rather large thickness of the cylinder may lead to a rather heavy weight of the cylinder, which affects the energy density. If D1-D2 is excessively large, during the stretching and molding of the case, a difference between a stretching amount of the body portion and a stretching amount of the cylinder is excessively large, and the cylinder is easily damaged during the stretching. In the above technical solution, the value of D1-D2 is limited to a range from 0.1 mm to 2mm, so that the strength of the case can meet a requirement and a loss of the energy density of the battery cell can be reduced.

In some embodiments, the first electrode terminal includes a first concave portion and a first connecting portion located at the bottom of the first concave portion. The first connecting portion is configured to realize electrical connection with the first tab through a first welding portion.

In the above technical solution, the thickness of the first connecting portion is reduced by providing the first concave portion on the first electrode terminal, thereby reducing welding power required for welding, reducing heat generation, reducing a risk of burn of other members, and improving the safety. The first welding portion can reduce resistance between the first electrode terminal and the first tab, and improve the overcurrent capability.

In some embodiments, the first connecting portion is welded to the first tab to form the first welding portion.

According to the above technical solution, a conductive path between the first electrode terminal and the first tab can be shortened, the resistance can be reduced, and the energy density and the overcurrent capability of the battery cell can be improved.

In some embodiments, the battery cell further includes a current collecting member connected to the first tab. The first connecting portion is welded to the current collecting member to form the first welding portion.

In the above technical solution, by arranging the current collecting member, differences of current paths between parts of the first tab at different positions and the first electrode terminal can be reduced, uniformity of current density of a first electrode sheet of the electrode assembly can be improved, internal resistance can be reduced, and the overcurrent capability can be improved.

In some embodiments, the first electrode terminal includes a terminal main body and a sealing plate, the terminal main body includes the first concave portion and the first connecting portion, and the first connecting portion is located on the side of the first concave portion facing the electrode assembly. The sealing plate is connected to the terminal main body and seals an opening of the first concave portion.

In the above technical solution, the sealing plate can protect the first connecting portion from the outside, reduce external impurities entering the first concave portion, reduce a risk of damages to the first connecting portion by the external impurities, and improve the sealing performance of the battery cell.

In some embodiments, at least part of the sealing plate is accommodated in the first concave portion.

In the above technical solution, the first concave portion can provide an accommodating space for the sealing plate, thereby reducing a size of the sealing plate protruding from the terminal main body, reducing a space occupied by the first electrode terminal, and increasing the energy density of the battery cell.

In some embodiments, the sealing plate protrudes from the surface of the terminal main body facing away from the electrode assembly.

In the above technical solution, at least part of the sealing plate protrudes from the surface of the terminal main body facing away from the electrode assembly, so as to reduce a risk of interference of the terminal main body with the attachment of the sealing plate to the first convergence component and reduce a risk of pseudo welding.

In some embodiments, a gap is provided between the sealing plate and the first connecting portion.

The surface of the first welding portion is uneven, and if the sealing plate is pressed against the first welding portion, the sealing plate may shake in the assembly process, affecting a sealing effect. In the above technical solution, a gap is provided between the sealing plate and the first connecting portion to separate the sealing plate from the first welding portion, so as to reduce a risk of direct contact between the sealing plate and the first welding portion, reduce the shaking of the sealing plate in the assembly process, and ensure the sealing effect.

In some embodiments, the first connecting portion is provided with a through hole for injecting the electrolyte solution.

In the above technical solution, by providing the through hole for injecting the electrolyte solution on the first connecting portion of the first electrode terminal, deformation of the case during the liquid injection can be reduced, the structure of the battery cell can be simplified, and the effect of the through hole on the strength of the case can be reduced.

In some embodiments, the electrode assembly further includes a second tab, the polarity of the second tab being opposite to that of the first tab. The battery cell further includes a second electrode terminal arranged on the cover body, the second electrode terminal including a second concave portion and a second connecting portion located at the bottom of the second concave portion. The second connecting portion is configured to realize electrical connection with the second tab through a second welding portion.

In the above technical solution, the thickness of the second connecting portion is reduced by providing the second concave portion on the second electrode terminal, thereby reducing welding power required for welding, reducing heat generation, reducing a risk of burn of other members, and improving the safety. The second welding portion can reduce resistance between the second electrode terminal and the second tab, and improve the overcurrent capability.

In a second aspect, an embodiment of the present application provides a battery, including a plurality of battery cells according to any one of the embodiments in the first aspect.

In a third aspect, an embodiment of the present application provides an electrical apparatus, including the battery in the second aspect, the battery being configured to provide electric energy.

### Description of Drawings

In order to illustrate the technical solutions of the examples of the present application more clearly, the drawings required in the examples of the present application will be briefly introduced below. It will be apparent that the drawings described below are only some examples of the present application. For those of ordinary skill in the art, other drawings can also be obtained according to the drawings without any creative effort.
Fig. 1 is a schematic structural diagram of a vehicle according to some embodiments of the present application;
Fig. 2 is a schematic exploded view of a battery according to some embodiments of the present application;
Fig. 3 is a schematic structural diagram of a battery module shown in Fig. 2;
Fig. 4 is a schematic partial sectional view of a battery according to some embodiments of the present application;
Fig. 5 is a schematic exploded view of a battery cell according to some embodiments of the present application;
Fig. 6 is a schematic enlarged view of the battery shown in Fig. 4 at Block A;
Fig. 7 is a schematic enlarged view of the battery shown in Fig. 4 at Block B;
Fig. 8 is a schematic partial sectional view of a case of a battery cell according to some embodiments of the present application;
Fig. 9 is a schematic enlarged view of Fig. 6 at Circle C;
Fig. 10 is a schematic sectional view of a first electrode terminal according to some embodiments of the present application;
Fig. 11 is a schematic partial sectional view of a battery cell according to some other embodiments of the present application;
Fig. 12 is a schematic sectional view of a battery cell according to some other embodiments of the present application;
Fig. 13 is a schematic enlarged view of Fig. 12 at block D;
Fig. 14 is a schematic structural diagram of a battery according to some other embodiments of the present application;
Fig. 15 is a schematic top view of a battery cell according to some other embodiments of the present application; and
Fig. 16 is a schematic sectional view of Fig. 15 taken along a line E-E.

In the drawings, the drawings are not drawn to actual scale.

### Detailed Description

To make the objectives, technical solutions, and advantages of the embodiments of the present application clearer, the technical solutions in the embodiments of the present application will be clearly described below with reference to the drawings in the embodiments of the present application. It will be apparent that the embodiments described are some of rather than all of the embodiments of the present application. Based on the embodiments in the present application, all other embodiments obtained by those of ordinary skill in the art without creative efforts fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", and the like in the specification and claims of the present application or the above drawings are intended to distinguish different objects, but not to describe a specific order or primary and secondary relationship.

Reference to "an embodiment" in the present application means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive with other embodiments.

In the description of the present application, it should be noted that the terms "mount", "connect", "join", and "attach" should be understood in a broad sense, unless otherwise explicitly specified or defined, which may be, for example, a fixed connection, a detachable connection, or an integrated connection; a direct connection or an indirect connection through an intermediate medium, or communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, same reference numerals denote same components, and for the sake of brevity, detailed descriptions of the same components are omitted in different embodiments. It should be understood that thicknesses, lengths, widths, and other dimensions of various components in the embodiments of the present application shown in the accompanying drawings, as well as an overall thickness, length and width, etc. of an integrated apparatus are only example descriptions, and should not constitute any limitation on the present application.

The appearance of "a plurality of" in the present application refers to two or more (including two).

In the present application, the term "parallel" not only includes an absolutely parallel case, but also includes substantially parallel cases of conventional cognition in engineering. At the same time, "vertical" also not only includes an absolutely vertical case, but also includes substantially vertical cases of conventional cognition in engineering.

In the present application, the battery cell may include a lithium-ion secondary battery cell, a lithium-ion primary battery cell, a lithium-sulfur battery cell, a sodium/lithium-ion battery cell, a sodium-ion battery cell, a magnesium-ion battery cell, and so on, which is not limited in the embodiments of the present application.

The battery as referred to in the embodiments of the present application refers to a single physical module including one or more battery cells to provide a higher voltage and capacity. For example, the battery as referred to in the present application may include a battery module, a battery pack, or the like. The battery generally includes a box body configured to encapsulate one or more battery cells. The box body can prevent effects of liquids or other foreign matters on the charging or discharging of the battery cell.

The battery cell includes an electrode assembly and an electrolyte solution, and the electrode assembly includes a positive electrode sheet, a negative electrode sheet, and a separator. The battery cell operates mainly relying on movement of metal ions between the positive electrode sheet and the negative electrode sheet. The positive electrode sheet includes a positive electrode current collector and a positive electrode active material layer. The positive electrode active material layer is applied to a surface of the positive electrode current collector. The positive electrode current collector includes a positive electrode current collecting portion and a positive tab. The positive electrode current collecting portion is coated with the positive electrode active material layer. The positive tab is not coated with the positive electrode active material layer. Taking a lithium-ion battery as an example, a material of the positive electrode current collector may be aluminum. The positive electrode active material layer includes a positive electrode active material. The positive electrode active material may be lithium cobalt oxide, lithium iron phosphate, ternary lithium, lithium manganate, or the like. The negative electrode sheet includes a negative electrode current collector and a negative electrode active material layer. The negative electrode active material layer is applied to a surface of the negative electrode current collector. The negative electrode current collector includes a negative electrode current collecting portion and a negative tab. The negative electrode current collecting portion is coated with the negative electrode active material layer. The negative tab is not coated with the negative electrode active material layer. A material of the negative electrode current collector may be copper. The negative electrode active material layer includes a negative electrode active material. The negative electrode active material may be carbon, silicon, or the like. The separator may be made from polypropylene (PP), polyethylene (PE), or the like.

The battery cell further includes a case and a cover plate, the case has an opening, and the cover plate is configured to cover the opening of the case, so as to be enclosed with the case to form an accommodating space for accommodating the electrode assembly and the electrolyte solution. During the assembly, the electrode assembly may be mounted into the case through the opening of the case, and then the cover plate and the case are connected, so as to realize the sealing of the opening of the case.

In order to draw electric energy from the electrode assembly, the battery cell is generally also provided with an electrode terminal. The electrode terminal is configured to electrically connect the electrode assembly to an external circuit, so as to realize the charging and discharging of the electrode assembly.

In the battery, the electrode terminal needs to be connected to an external member (such as a convergence component or a detection harness). When the battery cell is subjected to external impact, the external member may pull the electrode terminal. In the related art, the electrode terminal is generally mounted on the cover plate. Limited by a size of the cover plate, the distance between the joint (such as a weld) between the cover plate and the case and the electrode terminal is small. When the electrode terminal is pulled by the external member, the electrode terminal may exert force on the cover plate, and the force may be transferred to the joint between the cover plate and the case, which may lead to failure of the connection between the cover plate and the case, cause a risk of leakage of the electrolyte solution, and result in safety hazards.

In view of this, the embodiments of the present application provide a technical solution, in which, by mounting the electrode terminal to the end of the case away from the cover plate, a distance between the joint between the cover plate and the case and the electrode terminal can be increased, and the effect on the joint between the cover plate and the case can be reduced when the battery cell is subjected to external impact, reducing a risk of failure of the connection between the cover plate and the case and improving safety.

The technical solution described in the embodiments of the present application is suitable for a battery and an electrical apparatus using the battery.

The electrical apparatus may be, but is not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spacecrafts, and the like. The electric toy includes fixed or mobile electric toys, such as game consoles, electric car toys, electric ship toys, and electric airplane toys. The electric tool includes metal cutting electric tools, grinding electric tools, assembling electric tools, and railway electric tools, such as, electric drills, electric grinders, electric wrenches, electric screwdrivers, electric hammers, electric impact drills, concrete vibrators, and electric planers. The electrical apparatus is not specially limited in the embodiments of the present application.

In the following embodiments, for the convenience of description, the electrical apparatus is a vehicle.

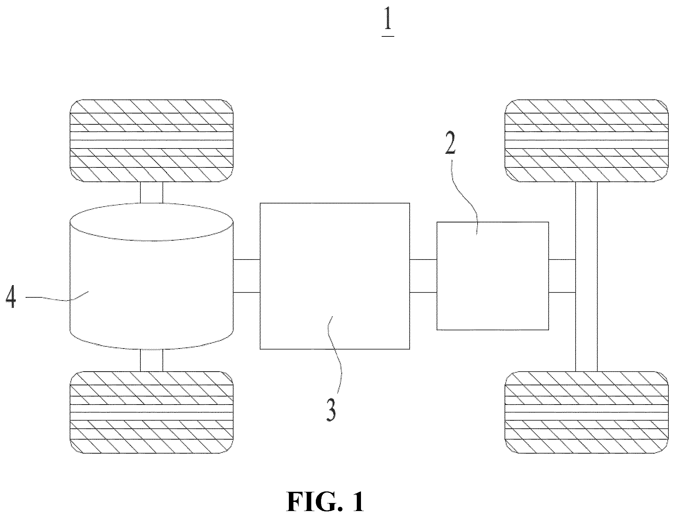

Fig. 1 is a schematic structural diagram of a vehicle according to some embodiments of the present application. As shown in Fig. 1, a battery 2 is provided inside a vehicle 1. The battery 2 may be provided at the bottom or head or rear of the vehicle 1. The battery 2 may be configured to power the vehicle 1. For example, the battery 2 may be used as an operating power source of the vehicle 1.

The vehicle 1 may further include a controller 3 and a motor 4. The controller 3 is configured to control the battery 2 to power the motor 4, for example, configured for operation power requirements of the vehicle 1 in starting, navigating, and driving.

In some embodiments of the present application, the battery 2 may not only be used as the operating power source of the vehicle 1, but also be used as a driving power source of the vehicle 1 to replace or partially replace fuel or natural gas to provide driving power for the vehicle 1.

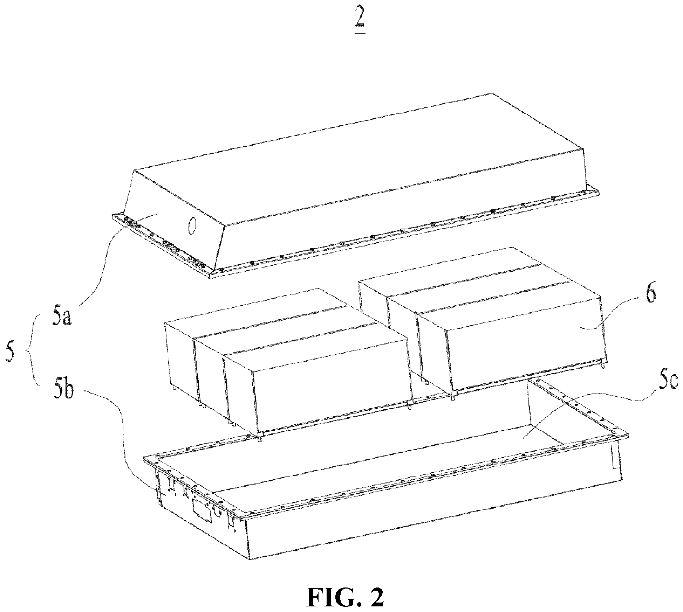

Fig. 2 is a schematic exploded view of a battery according to some embodiments of the present application. As shown in Fig. 2, the battery 2 includes a box body 5 and a battery cell (not shown in Fig. 2). The battery cell is accommodated in the box body 5.

The box body 5 is configured to accommodate the battery cell, and the box body 5 may be in various structural forms. In some embodiments, the box body 5 may include a first box body portion 5a and a second box body portion 5b. The first box body portion 5a and the second box body portion 5b cover each other, and the first box body portion 5a and the second box body portion 5b jointly define an accommodating space 5c for accommodating the battery cell. The second box body portion 5b may be a hollow structure with one end open, the first box body portion 5a is a plate-like structure, and the first box body portion 5a covers an open side of the second box body portion 5b to form the box body 5 with the accommodating space 5c. The first box body portion 5a and the second box body portion 5b may both be a hollow structure with one side open, and the open side of the first box body portion 5a covers the open side of the second box body portion 5b to form the box body 5 with the accommodating space 5c. Of course, the first box body portion 5a and the second box body portion 5b may be of various shapes, such as a cylinder or a cuboid.

In order to improve airtightness after the first box body portion 5a and the second box body portion 5b are connected, a sealing member, such as a sealant or a sealing ring, may also be arranged between the first box body portion 5a and the second box body portion 5b.

Assuming that the first box body portion 5a covers the top of the second box body portion 5b, the first box body portion 5a may also be referred to as an upper box cover, and the second box body portion 5b may also be referred to as a lower box body.

In the battery 2, one or more battery cells may be provided. If there are a plurality of battery cells, the plurality of battery cells may be connected in series or in parallel or in parallel-series connection. The "parallel-series connection" means that there are both series connection and parallel connection among the plurality of battery cells . The plurality of battery cells may be directly connected in series or in parallel or in parallel-series connection, and then an entirety formed by the plurality of battery cells may be accommodated in the box body 5. Certainly, the plurality of battery cells may be first connected in series or in parallel or in parallel-series connection to form battery modules 6, and a plurality of battery modules 6 are then connected in series or in parallel or in parallel-series connection to form an entirety and accommodated in the box body 5.

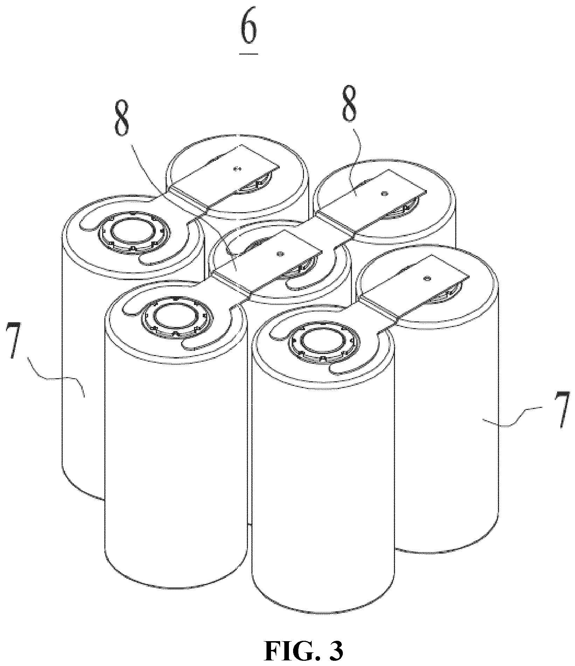

Fig. 3 is a schematic structural diagram of a battery module shown in Fig. 2.

In some embodiments, as shown in Fig. 3, a plurality of battery cells 7 are provided. The plurality of battery cells 7 are first connected in series or in parallel or in a combination thereof to form battery modules 6. A plurality of battery modules 6 are then connected in series or in parallel or in parallel-series connection to form an entirety and accommodated in the box body.

The plurality of battery cells 7 in the battery module 6 may be electrically connected through a convergence component 8, so as to realize parallel connection, series connection, or series-parallel connection of the plurality of battery cells 7 in the battery module 6. One or more convergence components may be provided. Each convergence component 8 is configured to electrically connect at least two battery cells.

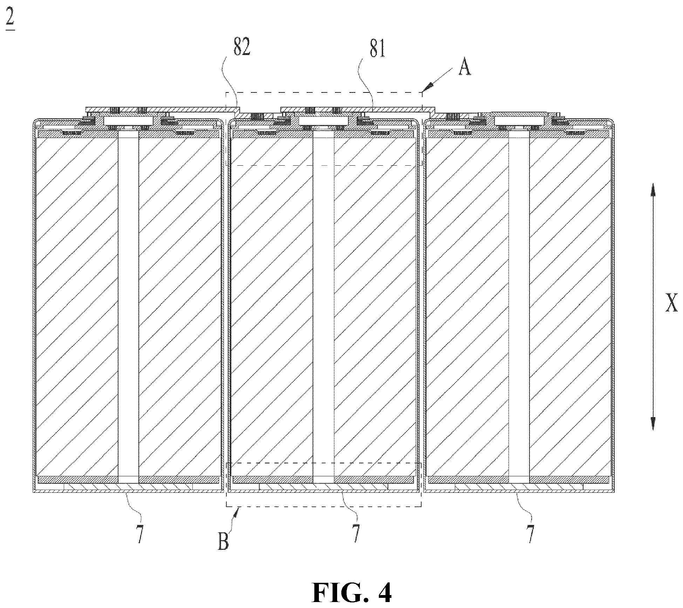

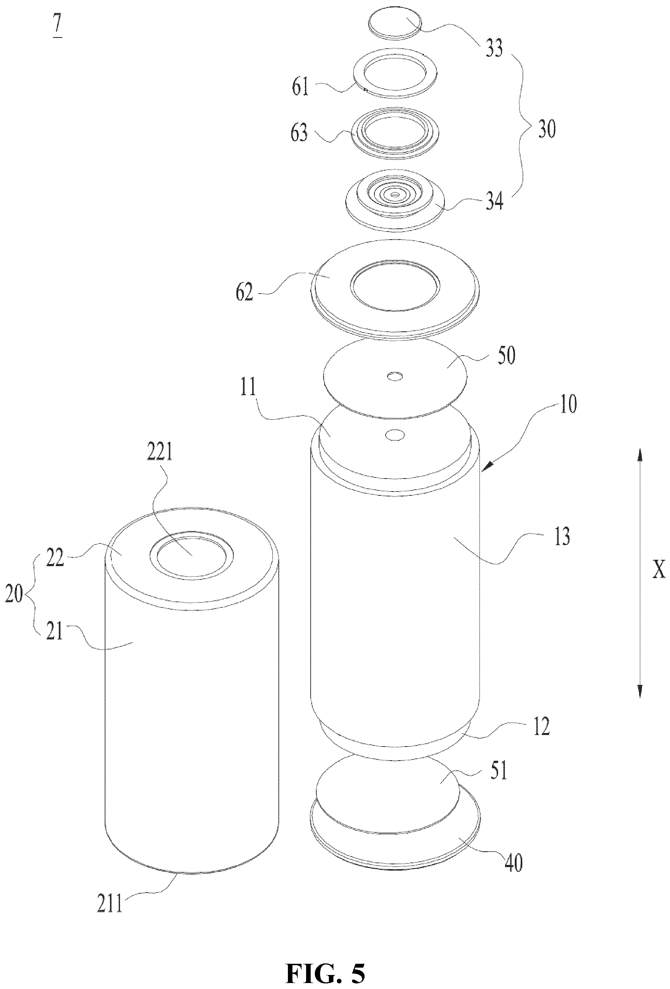

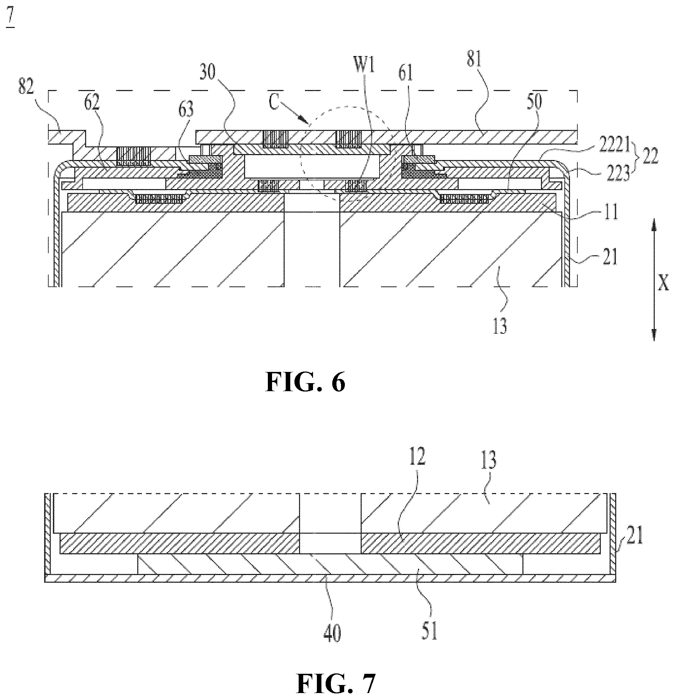

Fig. 4 is a schematic partial sectional view of a battery according to some embodiments of the present application; Fig. 5 is a schematic exploded view of a battery cell according to some embodiments of the present application; Fig. 6 is a schematic enlarged view of the battery shown in Fig. 4 at Block A; and Fig. 7 is a schematic enlarged view of the battery shown in Fig. 4 at Block B.

As shown in Fig. 4 to Fig. 7, the battery cell 7 according to some embodiments of the present application includes an electrode assembly 10, a case 20, a first electrode terminal 30, and a cover plate 40. The case 20 includes a cylinder 21 and a cover body 22 that are integrally formed, and the cylinder 21 has an opening 211 at the end facing away from the cover body 22. The electrode assembly 10 is accommodated in the case 20 and includes a first tab 11. The first electrode terminal 30 is arranged on the cover body 22 and is configured for electrical connection with the first tab 11. The cover plate 40 is connected to the cylinder 21 and covers the opening 211.

The electrode assembly 10 includes a first electrode sheet and a second electrode sheet with opposite polarity. One of the first electrode sheet and the second electrode sheet is a positive electrode sheet, and the other is a negative electrode sheet. Exemplarily, the electrode assembly 10 generates electrical energy through oxidation and reduction reactions during intercalation/deintercalation of ions in the positive electrode sheet and the negative electrode sheet. Optionally, the electrode assembly 10 further includes a separator. The separator is configured to insulate and isolate the first electrode sheet from the second electrode sheet.

In some examples, the first electrode sheet, the second electrode sheet, and the separator are all strip-shaped structures, and the first electrode sheet, the second electrode sheet, and the separator are wound as a whole around a central axis to form a winding structure. The winding structure may be a cylindrical structure, a flat structure, or a structure of other shapes. In some other examples, the electrode assembly 10 may also be a laminated structure formed by stacking the first electrode sheet, the separator, and the second electrode sheet.

The first tab 11 may be the portion of the first electrode sheet that is not coated with an active material layer. The first tab 11 may be a positive tab or a negative tab. Correspondingly, the first electrode terminal 30 may be a positive terminal or a negative terminal.

The case 20 is a hollow structure, with a space for accommodating the electrode assembly 10 formed therein. The case 20 may be of various shapes and sizes, such as a cuboid, a cylinder, a hexagonal prism, and the like. The shape of the case 20 may be determined according to a specific shape of the electrode assembly 10. For example, if the electrode assembly 10 is a cylindrical structure, a cylindrical case may be selected; if the electrode assembly 10 is a cuboid structure, a cuboid case may be selected.

The case 20 may be made of various materials, such as copper, iron, aluminum, stainless steel, aluminum alloy, and plastic, which is not specially limited in the embodiments of the present application.

The case 20 may be positively charged, negatively charged, or uncharged.

The cylinder 21 is provided around an outer periphery of the electrode assembly 10. The cylinder 21 may be a square cylinder, a circular cylinder, or other cylinder-like structures, such as a hexagonal cylinder.

The cover body 22 is connected to the end of the cylinder 21 facing away from the opening 211. The shape of the cover body 22 matches that of the cylinder 21. For example, the cylinder 21 is a square cylinder, and the cover body 22 may be a square structure. For example, the cylinder 21 is a cylinder, and the cover body 22 may be a circular structure.

The first electrode terminal 30 may be directly connected to the first tab 11 to realize the electrical connection between the first electrode terminal 30 and the first tab 11. Exemplarily, the first electrode terminal 30 may be connected to the first tab 11 by bonding, abutting, snap fit, welding or other means.

Alternatively, the first electrode terminal 30 may also be indirectly connected to the first tab 11 through other conductive members, so as to realize the electrical connection between the first electrode terminal 30 and the first tab 11. Exemplarily, the conductive member may be connected to the first tab 11 and the first electrode terminal 30 at the same time, so as to realize the electrical connection between the first electrode terminal 30 and the first tab 11.

The first electrode terminal 30 may be used as an output electrode of the battery cell 7, which may electrically connect the battery cell 7 with an external circuit, so as to realize the charging and discharging of the battery cell 7. Optionally, the first electrode terminal 30 may be configured for connection with a convergence component, so as to realize electrical connection with the battery cell 7.

The first electrode terminal 30 may be provided in the case 20 in an insulating manner, or may be electrically connected to the case 20, which is not limited in the embodiments of the present application, as long as the conduction between the positive electrode sheet and the negative electrode sheet is avoided.

The shape of the cover plate 40 may match of the cylinder 21 to fit the cylinder 21. For example, the cylinder 21 is a square cylinder, and the cover plate 40 may be a square structure. For example, the cylinder 21 is a cylinder, and the cover plate 40 may be a circular structure.

The cover plate 40 and the case 20 may be two members provided separately, and the two may be connected together by welding, riveting, bonding, snap fit, or other means. The joint between the cylinder 21 and the cover plate 40 may refer to a region of the cylinder 21 and the cover plate 40 for realizing fixed connection between the two.

In the embodiments of the present application, the first electrode terminal 30 is mounted to the cover body 22 and the cover plate 40 covers the opening 211 of the cylinder 21, which can increase a distance between a joint between the cylinder 21 and the cover plate 40 and the first electrode terminal 30, so as to reduce an effect on the joint between the cylinder 21 and the cover plate 40 when the battery cell 7 is subjected to external impact, reduce a risk of failure of the connection between the cover plate 40 and the case 20, reduce leakage of an electrolyte solution, and improve the safety.

In the embodiments of the present application, the cover body 22 and the cylinder 21 are integrally formed, and a connection process of the cover body 22 and the cylinder 21 may be omitted.

In some embodiments, the case 20 may be formed by a stretching process.

In some embodiments, the cover plate 40 is welded to the cylinder 21. Exemplarily, the joint between the cover plate 40 and the cylinder 21 may be a welding mark formed by welding the cover plate 40 and the cylinder 21.

The welding can not only realize the connection between the cover plate 40 and the cylinder 21, but also improve airtightness of the joint between the cover plate 40 and the cylinder 21. The first electrode terminal 30 is mounted to the cover body 22, which can increase a distance between a weld between the cover plate 40 and the cylinder 21 and the first electrode terminal 30, so as to reduce an effect on the weld between the cover plate 40 and the cylinder 21 when the first electrode terminal 30 is pulled by external force. Therefore, a risk of cracking at the weld between the cover plate 40 and the cylinder 21 is reduced, and the airtightness is improved.

In some embodiments, the cover plate 40 is connected to the cylinder 21 by laser welding.

In some embodiments, the first electrode terminal 30 is configured for connection with a first convergence component 81 of a battery.

In the battery, the plurality of battery cells 7 are electrically connected through a plurality of convergence components. Exemplarily, two output electrodes of the battery cell 7 are respectively electrically connected to two convergence components. The convergence component configured for electrical connection with the first electrode terminal 30 of the battery cell 7 may be referred to as the first convergence component 81 corresponding to the battery cell 7.

The first convergence component 81 may be connected to the first electrode terminal 30 by welding, bonding, riveting, or other means, so as to realize the electrical connection between the first convergence component 81 and the first electrode terminal 30.

Exemplarily, the first convergence component 81 may connect the first electrode terminal 30 of one battery cell 7 to the output electrode of the other battery cell 7 to connect the two battery cells 7 in series or in parallel.

The first electrode terminal 30 serves as an output electrode of the battery cell 7 and may be connected to the first convergence component 81 to facilitate electrical connections between the battery cells 7.

When the battery cell 7 is subjected to external impact, the first convergence component 81 may pull the first electrode terminal 30. In the embodiments of the present application, the first electrode terminal 30 is arranged on the cover body 22 away from the cover plate 40 to increase the distance between the joint between the cylinder 21 and the cover plate 40 and the first electrode terminal 30, so as to reduce an effect on the joint between the cylinder 21 and the cover plate 40 when the battery cell 7 is subjected to the external impact, reduce a risk of failure of the connection between the cover plate 40 and the case 20, reduce leakage of the electrolyte solution, and improve the safety.

In some embodiments, the electrode assembly 10 further includes a second tab 12, and polarity of the second tab 12 is opposite to that of the first tab 11. The cover body 22 is electrically connected to the second tab 12, and the cover body 22 is configured for connection with a second convergence component 82 of the battery.

The first tab 11 is the portion of the first electrode sheet that is not coated with the active material layer, and the second tab 12 is the portion of the second electrode sheet that is not coated with the active material layer.

Exemplarily, the electrode assembly 10 further includes a main body portion 13. The first tab 11 and the second tab 12 protrude from the main body portion 13. The main body portion 13 includes a portion of the first electrode sheet coated with the active material layer and a portion of the second electrode sheet coated with the active material layer. The first tab 11 and the second tab 12 are configured to draw a current from the main body portion 13.

The first tab 11 and the second tab 12 may extend from a same side of the main body portion 13, or may extend from two opposite sides respectively.

The second tab 12 may be directly electrically connected to the cover body 22, or may be indirectly electrically connected to the cover body 22 through one or more conductive structures. For example, the second tab 12 may be electrically connected to the cover body 22 through the cylinder 21. In another example, the second tab 12 may also be electrically connected to the cover body 22 through the cover plate 40 and the cylinder 21.

The first electrode terminal 30 is arranged on the cover body 22 in an insulating manner, the first electrode terminal 30 and the cover body 22 may have different polarity, and the first electrode terminal 30 and the cover body 22 may be used as different output electrodes.

When the second tab 12 is a negative tab and the first tab 11 is a positive tab, the cover body 22 is a negative output electrode of the battery cell 7, and the first electrode terminal 30 is a positive output electrode of the battery cell 7. When the second tab 12 is a positive tab and the first tab 11 is a negative tab, the cover body 22 is the positive output electrode of the battery cell 7, and the first electrode terminal 30 is the negative output electrode of the battery cell 7.

The convergence component configured for electrical connection with the cover body 22 of the battery cell 7 may be referred to as the second convergence component 82 corresponding to the battery cell 7. The second convergence component 82 may be connected to the cover body 22 by welding, bonding, or other means, so as to realize the electrical connection between the second convergence component 82 and the cover body 22.

Exemplarily, the first convergence component 81 connects the first electrode terminal 30 of one battery cell 7 and the cover body 22 of another battery cell 7, while the second convergence component 82 connects the cover body 22 of the one battery cell 7 and the first electrode terminal 30 of yet another battery cell 7, so that the first convergence component 81 and the second convergence component 82 connect the three battery cells 7 in series.

In this embodiment, by using the cover body 22 and the first electrode terminal 30 as two output electrodes of the battery cell 7, the structure of the battery cell 7 can be simplified, and overcurrent capability of the battery cell 7 can be ensured. The first electrode terminal 30 and the cover body 22 are located at a same end of the battery cell 7, so that the first convergence component 81 and the second convergence component 82 can be assembled to a same side of the battery cell 7. In this way, an assembly process can be simplified, improving efficiency of assembling a plurality of battery cells 7 into a group.

The second convergence component 82 may pull the cover body 22 when the battery cell 7 is subjected to external impact. The second convergence component 82 is connected to the cover body 22, which can increase a distance between the joint between the cover plate 40 and the cylinder 21 and a joint between the second convergence component 82 and the cover body 22, so as to reduce an effect on the joint between the cylinder 21 and the cover plate 40 when the battery cell 7 is subjected to the external impact, reduce a risk of failure of the connection between the cover plate 40 and the case 20, reduce leakage of the electrolyte solution, and improve the safety.

In some embodiments, the first tab 11 is arranged at the end of the electrode assembly 10 facing the cover body 22, and the second tab 12 is arranged at the end of the electrode assembly 10 facing the cover plate 40. The cover body 22 is electrically connected to the second tab 12 through the cylinder 21.

The cylinder 21 may be directly connected to the second tab 12 to realize the electrical connection between the cylinder 21 and the second tab 12. Alternatively, the cylinder 21 may also be connected to the second tab 12 through other conductive members, so as to realize the electrical connection between the cylinder 21 and the first tab 12.

The first tab 11 and the second tab 12 are respectively arranged at opposite ends of the electrode assembly 10, which can increase a distance between the first tab 11 and the second tab 12, reduce a risk of conduction between the first tab 11 and the second tab 12, and improve the safety. The electrical connection between the cover body 22 and the second tab 12 is realized through the cylinder 21, and a component connecting the cover body 22 and the second tab 12 can be omitted. Since the cover body 22 and the cylinder 21 are an integrated structure, resistance at the joint between the cover body 22 and the cylinder 21 is smaller, thereby improving the overcurrent capability.

In some embodiments, the second tab 12 is a negative tab, and the base material of the case 20 is steel.

The base material is a main component in the material composition of the case 20.

The case 20 is electrically connected to the negative tab, that is, the case 20 is in a low potential state. The steel case 20 is not easily corroded by the electrolyte solution in the low potential state.

In some embodiments, the electrode assembly 10 may be a cylinder.

The electrode assembly 10 has a central axis. The central axis of the electrode assembly 10 is a virtual straight line. The first electrode sheet, the second electrode sheet, and the separator may be wound based on the central axis.

In some embodiments, the first tab 11 is wound by a plurality of turns around the central axis of the electrode assembly 10. In other words, the first tab 11 includes a plurality of turns of tab layers. After the winding is completed, the first tab 11 is generally cylindrical, and a gap is left between two adjacent tab layers. In this embodiment of the present application, the first tab 11 may be treated to reduce the gap between the tab layers, so as to facilitate the connection of the first tab 11 with other components. For example, in this embodiment of the present application, the first tab 11 may be flattened, so that end regions of the first tab 11 away from the main body portion 13 can be collapsed and gathered together. A dense end face is formed at the end of the first tab 11 away from the main body portion 13 by the flattening, which reduces the gap between the tab layers and facilitates the connection of the first tab 11 with other components. Alternatively, in this embodiment of the present application, a place between two adjacent turns of tab layers may also be filled with a conductive material, so as to reduce the gap between the tab layers.

In some embodiments, the second tab 12 is wound by a plurality of turns around the central axis of the electrode assembly 10, and the second tab 12 includes a plurality of turns of tab layers. Exemplarily, the second tab 12 is also subjected to the flattening to reduce the gap between the tab layers of the second tab 12.

In some embodiments, the second tab 12 is electrically connected to the cylinder 21 through the cover plate 40.

In some embodiments, the battery cell 7 further includes an adapter component 51, and the adapter component 51 connects the cover plate 40 and the second tab 12 to electrically connect the second tab 12 to the cover plate 40. Specifically, the second tab 12 is electrically connected to the cover body 22 through the adapter component 51, the cover plate 40, and the cylinder 21.

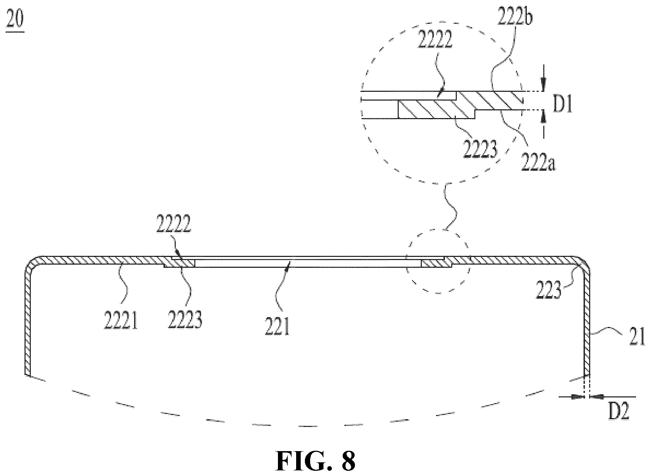

Fig. 8 is a schematic partial sectional view of a case of a battery cell according to some embodiments of the present application.

Referring to Fig. 5 to Fig. 8 together, in some embodiments, the cover body 22 includes a body portion 2221 and a bending portion 223, and the bending portion 223 is integrally connected to the cylinder 21 and the body portion 2221.

This embodiment does not limit a thickness of the body portion 2221, a thickness of the bending portion 223, and a wall thickness of the cylinder 21, and the thicknesses of the three may be determined according to requirements.

The bending portion 223 encircles the body portion 2221 and bends relative to the body portion 2221.

In this embodiment of the present application, the bending portion 223 may release stress during the molding of the case 20, which reduces stress concentration and reduces a risk of rupture of the case 20.

In some embodiments, the cover body 22 is provided with a first electrode lead-out hole 221, and the first electrode lead-out hole 221 runs through the cover body 22, so that electric energy in the electrode assembly 10 can be drawn to the outside of the case 20. Exemplarily, the first electrode lead-out hole 221 runs through the cover body 22 along a thickness direction of the cover body 22.

The first electrode lead-out hole 221 may be provided in the body portion 2221. That is, the first electrode lead-out hole 221 is directly enclosed by the body portion 2221. Alternatively, the first electrode lead-out holes 221 may also be provided in other parts of the cover body 22.

The first electrode terminal 30 is configured to fit the first electrode lead-out hole 221 to cover the first electrode lead-out hole 221. The first electrode terminal 30 may extend into the first electrode lead-out hole 221, or may not extend into the first electrode lead-out hole 221. The first electrode terminal 30 is fixed to the cover body 22. The first electrode terminal 30 may be wholly fixed to an outer side of the cover body 22, or may extend into the interior of the case 20 through the first electrode lead-out hole 221.

In some embodiments, the cover body 22 is electrically connected to the second tab 12. Optionally, at least part of the body portion 2221 is configured to connect the second convergence component 82.

The body portion 2221 may be a plate-like structure. The body portion 2221 having the plate-like structure may be better attached to the second convergence component 82, so as to ensure connection strength and an overcurrent area between the two.

The second convergence component 82 may be connected to the body portion 2221 by welding, bonding, or other means, so as to realize the electrical connection between the second convergence component 82 and the cover body 22.

In some embodiments, the body portion 2221 is an annular plate-like structure, which extends along a circumferential direction of the first electrode lead-out hole 221 to surround the first electrode lead-out hole 221.

In some embodiments, the cylinder 21 is cylindrical, the first electrode lead-out hole 221 is a circular hole, and a central axis of the cylinder 21 and a central axis of the first electrode lead-out hole 221 are arranged to coincide. "Arranged to coincide" does not require that the central axis of the cylinder 21 and the central axis of the first electrode lead-out hole 221 absolutely completely coincide with each other, and there may be deviations allowed by the process.

The first electrode lead-out hole 221 is configured to define the position of the first electrode terminal 30. In this embodiment, the central axis of the first electrode lead-out hole 221 is arranged to coincide with the central axis of the cylinder 21, so that at least part of the first electrode terminal 30 is located in the center of the cover body 22. In this way, when the plurality of battery cells 7 are assembled into a group, the requirement on position accuracy of the first electrode terminal 30 can be reduced, which simplifies the assembly process and improves assembly efficiency.

In some embodiments, the thickness of the body portion 2221 is greater than the wall thickness of the cylinder 21.

The body portion 2221 with a larger thickness can better support members such as the first electrode terminal 30. When the first electrode terminal 30 is pulled by external force, the body portion 2221 with the larger thickness is less deformed. The cylinder 21 mainly separates the electrode assembly 10 from the outside, which may have a relatively small thickness, thereby reducing an overall weight of the battery cell 7 and increasing the energy density.

In some embodiments, the body portion 2221 may be configured to connect the second convergence component 82. The main body portion 2221 needs to have a relatively large thickness to ensure strength of the connection between the main body portion 2221 and the second convergence component 82.

Exemplarily, the body portion 2221 is welded to the second convergence component 82. If the thickness of the body portion 2221 is excessively small, the body portion 2221 is easily melted through during the welding. Therefore, the body portion 2221 in this embodiment of the present application has a larger thickness.

In some embodiments, the body portion 2221 is a flat plate structure with a uniform thickness.

In some embodiments, the body portion 2221 has an inner surface 222a and an outer surface 222b arranged oppositely along its thickness direction, the inner surface 222a of the body portion 2221 faces the electrode assembly 10, and the outer surface 222b of the body portion 2221 faces away from the electrode assembly 10. Optionally, both the inner surface 222a and the outer surface 222b are planar.

In some embodiments, the thickness D1 of the body portion 2221 and the wall thickness D2 of the cylinder 21 satisfy: 0.1 mm≤D1-D2≤2 mm.

If D1-D2 is less than 0.1 mm, the thickness of the body portion 2221 is rather small or the thickness of the cylinder 21 is rather large. The rather small thickness of the body portion 2221 may lead to insufficient strength of the body portion 2221. The rather large thickness of the cylinder 21 may lead to a rather heavy weight of the cylinder 21, which affects the energy density. The case 20 may be formed by stretching from a flat plate. If D1-D2 is greater than 2 mm, during the stretching and molding, a difference between a stretching amount of the body portion 2221 and a stretching amount of the cylinder 21 is excessively large, and the cylinder 21 is easily damaged during the stretching.

After deep research and a lot of experiments, the inventor has found that, when the value of D1-D2 is limited to a range from 0.1 mm to 2mm, the strength of the case 20 can meet the requirement and a loss of the energy density of the battery cell 7 can be reduced.

Optionally, the value of D1-D2 is 0.1 mm, 0.2 mm, 0.3 mm, 0.5 mm, 0.8 mm, 1 mm, 1.2 mm, 1.5 mm, 1.8 mm or 2 mm.

In some embodiments, the cover body 22 includes an accommodating concave portion 2222 recessed from the outer surface 222b of the body portion 2221 in a direction facing the electrode assembly 10. A bottom wall of the accommodating concave portion 2222 is provided with a first electrode lead-out hole 221, and the first electrode terminal 30 is mounted in the first electrode lead-out hole 221.

The body portion 2221 is arranged around an outer periphery of the accommodating concave portion 2222. The first electrode lead-out hole 221 runs through the bottom wall of the accommodating concave portion 2222 and communicates the accommodating concave portion 2222 with the interior of the case 20.

By arranging the accommodating concave portion 2222, a size of the first electrode terminal 30 protruding from the outer surface 222b of the body portion 2221 can be reduced, so as to reduce a maximum size of the battery cell and increase the energy density of the battery cell.

In some embodiments, the battery cell 7 further includes a first insulating member 61, the accommodating concave portion 2222 is configured to receive at least part of the first insulating member 61, and the part of the first insulating member 61 accommodated in the accommodating concave portion 2222 is attached to a side wall and/or a bottom wall of the accommodating concave portion 2222.

The first electrode terminal 30 is fixed to the cover body 22. Exemplarily, the bottom wall of the accommodating concave portion 2222 may be configured to fit the first electrode terminal 30 for fixation.

The first insulating member 61 is configured to insulate at least part of the first electrode terminal 30 from the cover body 22. Exemplarily, at least part of the first insulating member 61 is clamped between the bottom wall of the accommodating concave portion 2222 and the first electrode terminal 30, so as to insulate and separate the bottom wall of the accommodating concave portion 2222 from the first electrode terminal 30, thereby reducing a risk of short circuit.

In this embodiment, a portion of the first insulating member 61 may be accommodated in the accommodating concave portion 2222, or the first insulating member 61 may be wholly accommodated in the accommodating concave portion 2222.

The portion of the first insulating member 61 accommodated in the accommodating concave portion 2222 may be attached only to the side wall of the accommodating concave portion 2222, or only to the bottom wall of the accommodating concave portion 2222, or may be attached to both the bottom wall and the side wall of the accommodating concave portion 2222.

"Attach" means attaching two members for contact, and the two members may be attached and fixed, or only attached but not fixed. For example, the first electrode terminal 30 and the bottom wall of the accommodating concave portion 2222 sandwich, from two sides, the portion of the first insulating member 61 accommodated in the accommodating concave portion 2222, and the portion of the first insulating member 61 accommodated in the accommodating concave portion 2222 is attached to the bottom wall of the accommodating concave portion 2222 under clamping force. Of course, the portion of the first insulating member 61 accommodated in the accommodating concave portion 2222 may also be attached to the bottom wall of the accommodating concave portion 2222 by an adhesive.

In this embodiment, by arranging the accommodating concave portion 2222, the first insulating member 61 can be positioned, thereby simplifying the assembly process. The accommodating concave portion 2222 can accommodate at least part of the first insulating member 61, which can reduce sizes of the first insulating member 61 and the first electrode terminal 30 protruding from the outer surface 222b of the body portion 2221 to reduce the maximum size of the battery cell 7 size and increase energy density.

In some embodiments, the outer surface 222b of the body portion 2221 is exposed, which is not covered by the first electrode terminal 30 and the first insulating member 61.

In some embodiments, a cover body protrusion 2223 protruding from the inner surface 222a of the body portion 2221 in a direction facing the electrode assembly 10 is formed at a position on the cover body 22 opposite the accommodating concave portion 2222. **In** this embodiment, by arranging the cover body protrusion 2223, the thickness of the bottom wall of the accommodating concave portion 2222 can be increased, so as to improve strength of the bottom wall of the accommodating concave portion 2222, so that the bottom wall of the accommodating concave portion 2222 can effectively support the first electrode terminal 30.

In some embodiments, the accommodating concave portion 2222 and the cover body protrusion 2223 may be formed by punching the cover body 22.

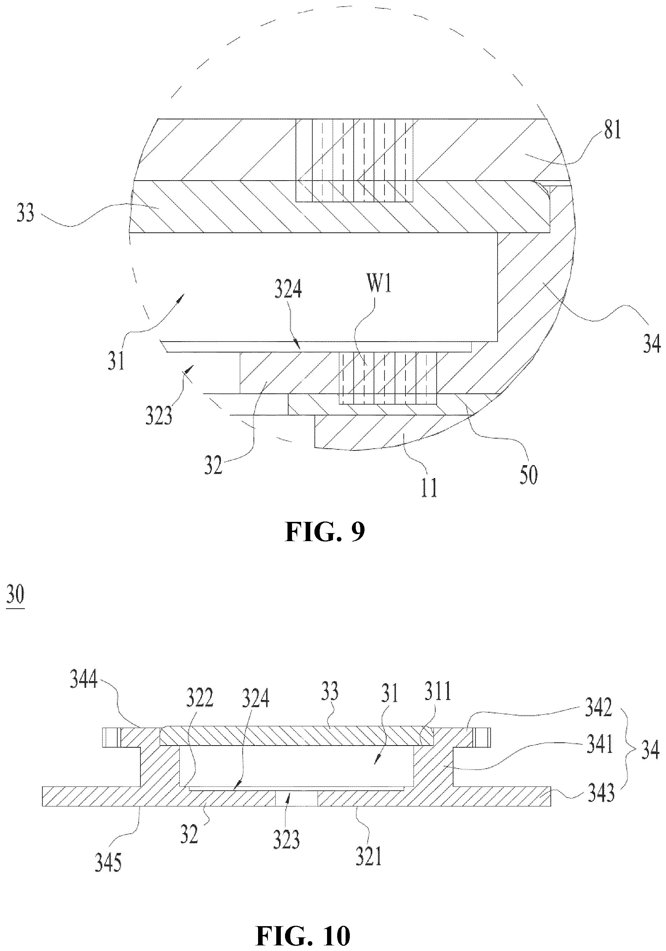

Fig. 9 is a schematic enlarged view of Fig. 6 at Circle C; and Fig. 10 is a schematic sectional view of a first electrode terminal according to some embodiments of the present application.

Referring to Fig. 6 to Fig. 10 together, in some embodiments, the first electrode terminal 30 includes a first concave portion 31 and a first connecting portion 32 at the bottom of the first concave portion 31. The first connecting portion 32 is configured to realize electrical connection with the first tab 11 through a first welding portion W1.

The first concave portion 31 may be recessed from the side of the first electrode terminal 30 facing away from the electrode assembly 10 in a direction facing the electrode assembly 10, or may be recessed from the side of the first electrode terminal 30 facing the electrode assembly 10 in a direction facing away from the electrode assembly 10.

The first connecting portion 32 is the portion of the first electrode terminal 30 corresponding to a bottom surface of the first concave portion 31.

The first connecting portion 32 is welded with other components to form the first welding portion W1. The current is conducted between the first electrode terminal 30 and the first tab 11 through the first welding portion W1.

In some examples, the first connecting portion 32 may be directly welded to the first tab 11 to form the first welding portion W1. For example, part of the first connecting portion 32 and part of the first tab 11 are melted to form a molten pool, and after the molten pool is solidified, the first welding portion W1 is formed.

In some other alternative examples, the first connecting portion 32 is welded to other components connected to the first tab 11 (e.g., a current collecting member to be described later) to form the first welding portion W1. For example, part of the first connecting portion 32 and part of the current collecting member are melted to form a molten pool, and after the molten pool is solidified, the first welding portion W1 is formed.

In this embodiment of the present application, the shape, position, depth, and number of the first welding portion W1 are not specially limited. For example, the first welding portion W1 may be of a shape of a straight line, a C shape, a ring shape, a spiral shape, a V shape, or other shapes. One or more first welding portions W1 may be provided.

In this embodiment of the present application, the thickness of the first connecting portion 32 is reduced by providing the first concave portion 31 on the first electrode terminal 30, thereby reducing welding power required for welding, reducing heat generation, reducing a risk of burn of other members, and improving the safety. The first welding portion W1 can reduce resistance between the first electrode terminal 30 and the first tab 11, and improve the overcurrent capability.

Exemplarily, a welding device may irradiate a laser on a surface of the first connecting portion 32 facing the first concave portion 31, the laser melts part of the first connecting portion 32 and part of the components located inside the first connecting portion 32 to form a molten pool, and after the molten pool is solidified, the first welding portion W1 is formed.

In some embodiments, the battery cell 7 further includes a current collecting member 50 connected to the first tab 11. The first connecting portion 32 is welded to the current collecting member 50 to form the first welding portion W1.

The current collecting member 50 electrically connects the first tab 11 to the first electrode terminal 30. This embodiment of the present application does not limit a connection manner of the first tab 11 and the current collecting member 50. For example, the current collecting member 50 may be connected to the first tab 11 by welding, abutting, or bonding.

Limited by the size of the first connecting portion 32, the number of tab layers of the first tab 11 that can be directly connected to the first connecting portion 32 is limited, which affects uniformity of current density of the first electrode sheet. Compared with the first electrode terminal 30, the current collecting member 50 may have a larger connection area with the first tab 11, and the current collecting member 50 may be connected to more tab layers. By arranging the current collecting member 50, differences of current paths between parts of the first tab 11 at different positions and the first electrode terminal 30 can be reduced, the uniformity of the current density of the first electrode sheet of the electrode assembly 10 can be improved, internal resistance can be reduced, and the overcurrent capability can be improved.

In some embodiments, the first electrode terminal 30 includes a terminal main body 34 and a sealing plate 33, the terminal main body 34 includes the first concave portion 31 and the first connecting portion 32, and the first connecting portion 32 is located on the side of the first concave portion 31 facing the electrode assembly 10. The sealing plate 33 is connected to the terminal main body 34 and seals an opening of the first concave portion 31.

The sealing plate 33 may be entirely located outside the first concave portion 31, or may be partially accommodated in the first concave portion 31, as long as the sealing plate 33 can seal the opening of the first concave portion 31.

The sealing plate 33 can protect the first connecting portion 32 from the outside, reduce external impurities entering the first concave portion 31, reduce a risk of damages to the first connecting portion 32 by the external impurities, and improve the sealing performance of the battery cell 7.

In some embodiments, at least part of the sealing plate 33 is accommodated in the first concave portion 31.

The sealing plate 33 may be entirely located in the first concave portion 31, or may be partially accommodated in the first concave portion 31.

The first concave portion 31 can provide an accommodating space for the sealing plate 33, thereby reducing a size of the sealing plate 33 protruding from the terminal main body 34, reducing a space occupied by the first electrode terminal 30, and increasing the energy density of the battery cell 7.

In some embodiments, the sealing plate 33 may be configured for connection with the first convergence component 81 of the battery. When the first convergence component 81 and the sealing plate 33 need to be welded, firstly, the first convergence component 81 is attached to an upper surface of the sealing plate 33 (that is, an outer surface of the sealing plate 33 facing away from the first connecting portion 32), and then the first convergence component 81 and the sealing plate 33 are welded.

In some embodiments, the sealing plate 33 protrudes from the surface of the terminal main body 34 facing away from the electrode assembly 10.

At least part of the sealing plate 33 protrudes from the surface of the terminal main body 34 facing away from the electrode assembly 10, so as to reduce a risk of interference of the terminal main body 34 with the attachment of the sealing plate 33 to the first convergence component 81 and reduce a risk of pseudo welding.

In some embodiments, a gap is provided between the sealing plate 33 and the first connecting portion 32. The gap may be configured to avoid the first welding portion W1.

The surface of the first welding portion W1 is uneven, and if the sealing plate 33 is pressed against the first welding portion W1, the sealing plate 33 may shake in the assembly process, affecting a sealing effect. In this embodiment, a gap is provided between the sealing plate 33 and the first connecting portion 32 to separate the sealing plate 33 from the first welding portion W1, so as to reduce a risk of direct contact between the sealing plate 33 and the first welding portion W1, reduce the shaking of the sealing plate 33 in the assembly process, and ensure the sealing effect.

In some embodiments, a step surface 311 is arranged on a side wall of the first concave portion 31, at least part of the sealing plate 33 is accommodated in the first concave portion 31, and the step surface 311 is configured to support the sealing plate 33.

The first concave portion 31 is a stepped concave portion with large exterior and small interior.

When the sealing plate 33 is assembled, the step surface 311 can support the sealing plate 33 and position the sealing plate 33, thereby simplifying the assembly process and forming a gap between the sealing plate 33 and the first connecting portion 32.

In some embodiments, the sealing plate 33 is welded to the side wall of the first concave portion 31 to seal the opening of the first concave portion 31.

In some embodiments, the first connecting portion 32 is provided with a groove 324 recessed from a first outer surface 322 of the first connecting portion 32 in a direction facing the electrode assembly 10.

The first connecting portion 32 has the first outer surface 322 and a first inner surface 321 arranged oppositely along its thickness direction. The first inner surface 321 faces the electrode assembly 10 and the first outer surface 322 faces away from the electrode assembly 10. Optionally, both the first outer surface 322 and the first inner surface 321 are planar. The groove 324 is recessed relative to the first outer surface 322 in a direction facing the electrode assembly 10.

The portion between the bottom surface of the groove 324 and the first inner surface 321 is configured to be welded with other components and form the first welding portion W1.

In this embodiment, a groove 324 is provided on the first connecting portion 32 to form a stepped structure on the first connecting portion 32. A gap is formed between the first outer surface 322 and the bottom surface of the groove 324.

During the manufacturing of the battery cell 7, an external device needs to coordinate with the first connecting portion 32. The surface of the first welding portion W1 is uneven, and if the external device is pressed against the first welding portion W1, the external device is easily crushed by the first welding portion W1. In this embodiment, the groove 324 is arranged to form the gap between the first outer surface 322 and the bottom surface of the groove 324, so that the first outer surface 322 can be configured to support the external device to separate the external device from the first welding portion W1, which reduces the risk of crushing of the external device.

Exemplarily, the external device may be a liquid injection device, an air extraction device, a welding device, or other devices for the battery cell 7.

In some embodiments, the first connecting portion 32 is provided with a through hole 323 for injecting the electrolyte solution.

One or more through holes 323 may be provided.

During the molding of the battery cell 7, the through hole 323 may communicate a space outside the case 20 with an inner space of the case 20. When liquid injection is required, a liquid injection head of the liquid injection device is pressed against the first connecting portion 32, and then the liquid injection head injects the electrolyte solution into the case 20 through the through hole 323.

Exemplarily, during the liquid injection, the liquid injection head is pressed against the first outer surface 322, and the first outer surface 322 can support the liquid injection head and coordinate with the liquid injection head to achieve sealing, thereby reducing a risk of leakage of the electrolyte solution to the outside of the battery cell 7.

By providing the through hole 323 for injecting the electrolyte solution on the first connecting portion 32 of the first electrode terminal 30, deformation of the case 20 during the liquid injection can be reduced, the structure of the battery cell 7 can be simplified, and the effect of the through hole 323 on the strength of the case 20 can be reduced.

In some embodiments, the sealing plate 33 is configured to seal the through hole 323. After the process related to the through hole 323 is completed, the sealing plate 33 is connected to the terminal main body 34 to reduce the risk of leakage of the electrolyte solution through the through hole 323 and improve the sealing performance.

In some embodiments, the through hole 323 may also be applied to other processes, such as a formation process.

In the formation process of the battery cell 7, gas may be generated in the case 20, and the through hole 323 may also be configured to communicate with an external negative pressure device to extract the gas in the case 20.

In some embodiments, the terminal main body 34 has a second outer surface 344 and a second inner surface 345 that are arranged oppositely. The second inner surface 345 faces the electrode assembly 10 and the second outer surface 344 faces away from the electrode assembly 10. The first concave portion 31 is recessed from the second outer surface 344 to the first outer surface 322 of the first connecting portion 32 in a direction facing the electrode assembly 10. At least part of the sealing plate 33 protrudes from the second outer surface 344 of the terminal main body 34.

In some embodiments, the first connecting portion 32 is arranged at the end of the terminal main body 34 facing the electrode assembly 10, and the first inner surface 321 of the first connecting portion 32 is flush with the second inner surface 345.

The second inner surface 345 is the surface of the terminal main body 34 facing the electrode assembly 10. The first inner surface 321 of the first connecting portion 32 constitutes part of the second inner surface 345. In this way, the terminal main body 34 can fit the current collecting member 50 having a flat plate structure. In this embodiment, as long as the current collecting member 50 is attached to the second inner surface 345, the first connecting portion 32 and the current collecting member 50 can be attached to facilitate welding of the first connecting portion 32 and the current collecting member 50.

In some embodiments, the terminal main body 34 includes a columnar portion 341, a first position-limit portion 342, and a second position-limit portion 343. At least part of the columnar portion 341 is located in the first electrode lead-out hole 221, and the first concave portion 31 is provided in the columnar portion 341. The first position-limit portion 342 and the second position-limit portion 343 are both connected to and protrude from an outer sidewall of the columnar portion 341, and the first position-limit portion 342 and the second position-limit portion 343 are respectively provided on an outer side and an inner side of the cover body 22 and configured to clamp part of the cover body 22.

The first position-limit portion 342 being provided on the outer side of the cover body 22 means that the first position-limit portion 342 is provided on the side of the cover body 22 facing away from the electrode assembly 10. The second position-limit portion 343 being provided on the inner side of the cover body 22 means that the second position-limit portion 343 is provided on the side of the cover body 22 facing the electrode assembly 10.

In the thickness direction of the cover body 22, at least part of the first position-limit portion 342 overlaps with the cover body 22, and at least part of the second position-limit portion 343 overlaps with the cover body 22. The columnar portion 341 passes through the first electrode lead-out hole 221 to connect the first position-limit portion 342 and the second position-limit portion 343 respectively located on two sides of the cover body 22.

The first position-limit portion 342 and the second position-limit portion 343 clamp part of the cover body 22 from two sides to fix the terminal main body 34 to the cover body 22. The first position-limit portion 342 and the second position-limit portion 343 may directly clamp the cover body 22 or indirectly clamp the cover body 22 through other members.

Optionally, the columnar portion 341 is cylindrical. The first position-limit portion 342 and the second position-limit portion 343 are both annular structures around the columnar portion 341.

In some embodiments, at least part of the first insulating member 61 is provided between the first position-limit portion 342 and the cover body 22. Exemplarily, at least part of the first insulating member 61 is provided between the first position-limit portion 342 and the bottom surface of the accommodating concave portion 2222. The first insulating member 61 can insulate and isolate the first position-limit portion 342 from the cover body 22.

In some embodiments, the battery cell 7 further includes a second insulating member 62, and at least part of the second insulating member 62 is provided between the second position-limit portion 343 and the cover body 22. Exemplarily, at least part of the second insulating member 62 is provided between the second position-limit portion 343 and a top end face of the cover body protrusion 2223.

The second insulating member 62 can insulate and isolate at least part of the second position-limit portion 343 from the cover body 22.

In some embodiments, both the first insulating member 61 and the second insulating member 62 are annular structures arranged around the columnar portion 341.

In some embodiments, the battery cell 7 further includes a sealing ring 63. The sealing ring 63 sleeves the cylindrical portion 341 and is configured to seal the first electrode lead-out hole 221. Optionally, part of the sealing ring 63 extends into the first electrode lead-out hole 221 to separate a hole wall of the first electrode lead-out hole 221 from the columnar portion 341.

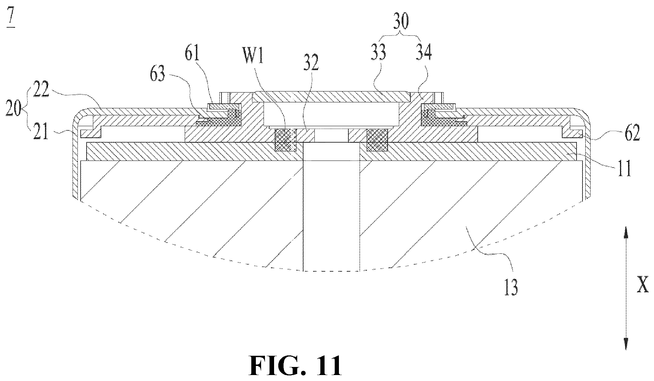

FIG. 11 is a schematic partial sectional view of a battery cell according to some examples of the present application.

As shown in Fig. 11, in some embodiments, the first connecting portion 32 is welded to the first tab 11 to form the first welding portion W1.

The current collecting member in the battery cell 7 according to this embodiment of the present application may be omitted, so as to simplify the internal structure of the battery cell, shorten a conductive path between the first electrode terminal 30 and the first tab 11, reduce the resistance, and improve the energy density and the overcurrent capability of the battery cell 7.

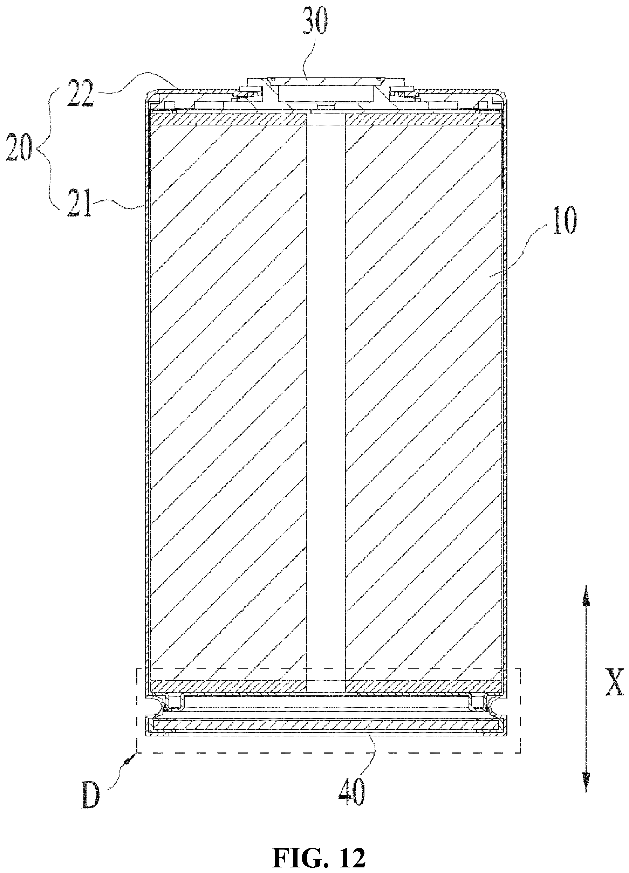

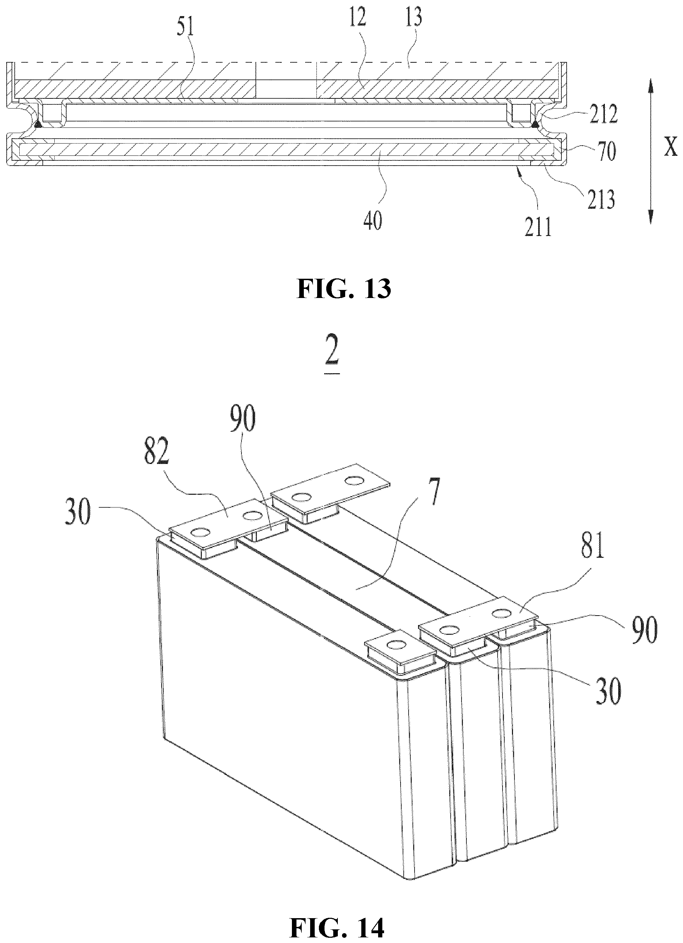

Fig. 12 is a schematic sectional view of a battery cell according to some other embodiments of the present application; and Fig. 13 is a schematic enlarged view of Fig. 12 at block D.

As shown in Fig. 12 and Fig. 13, in some embodiments, the cover plate 40 is in sealing connection with the cylinder 21 through a sealing member 70. By arranging the sealing member 70 between the cover plate 40 and the cylinder 21, the airtightness of the battery cell 7 can be improved.

Exemplarily, the joint between the cover plate 40 and the cylinder 21 may be a region of the cover plate 40 and the cylinder 21 for jointly clamping the sealing member 70.

In some embodiments, the cylinder 21 includes a support portion 212 and a flanging portion 213, and the support portion 212 and the flanging portion 213 are arranged along an axial direction X of the cylinder 21. In the axial direction X of the cylinder 21, at least part of the cover plate 40 is clamped between the support portion 212 and the flanging portion 213, so as to realize the fixation of the cover plate 40.

In some embodiments, the sealing member 70 wraps an outer periphery of the cover plate 40. In the axial direction X of the cylinder 21, a part of the sealing member 70 is clamped between the support portion 212 and the cover plate 40, and a part is clamped between the flanging portion 213 and the cover plate 40, so as to realize the sealing of the opening 211 of the cylinder 21.

In some embodiments, after the electrode assembly 10 is put into the case 20, the cylinder 21 is rolled from the outside to form an internally convex support portion 212 on the cylinder 21. After the molding of the supporting portion 212, the cover plate 40 and the sealing member 70 wrapping the cover plate 40 are put into the cylinder 21, and then an end portion of the cylinder 21 is bent through a flanging process, so that the cylinder 21 forms the flanging portion 213.

In some embodiments, the second tab 12 is electrically connected to the cylinder 21 through the adapter component 51.

In some embodiments, the adapter component 51 is welded to the support portion 212 of the cylinder 21 to electrically connect the cylinder 21 and the second tab 12.

In some embodiments, the sealing member 70 insulates and isolates the cover plate 40 from the cylinder 21.

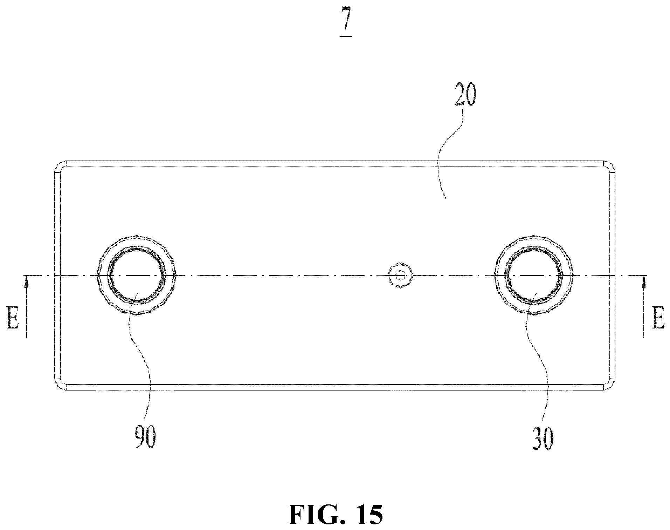

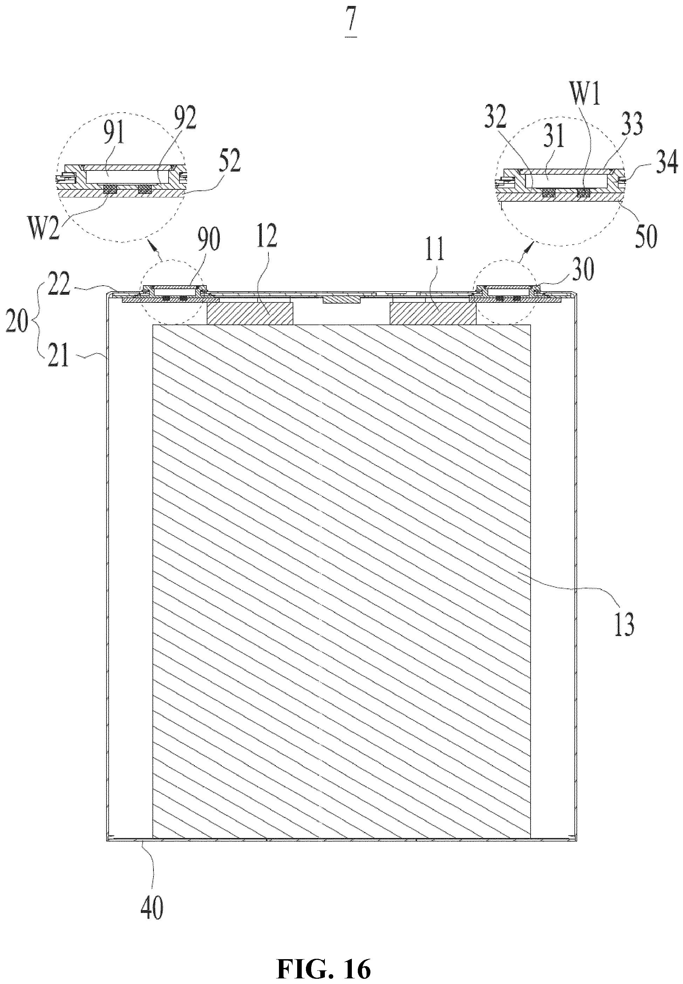

Fig. 14 is a schematic structural diagram of a battery according to some other embodiments of the present application; Fig. 15 is a schematic top view of a battery cell according to some other embodiments of the present application; and Fig. 16 is a schematic sectional view of Fig. 15 taken along a line E-E.

As shown in Fig. 14 to Fig. 16, in some embodiments, the electrode assembly 10 further includes a second tab 12, and polarity of the second tab 12 is opposite to that of the first tab 11. The battery cell 7 further includes a second electrode terminal 90 electrically connected to the second tab 12. The second electrode terminal 90 is configured for connection with the second convergence component 82 of the battery.

The second electrode terminal 90 may be arranged on the cover body 22 or may be arranged on the cover plate 40.

The second electrode terminal 90 may be directly connected to the second tab 12 to realize the electrical connection between the second electrode terminal 90 and the second tab 12. Exemplarily, the second electrode terminal 90 may be connected to the second tab 12 by bonding, abutting, snap fit, welding or other means.

Alternatively, the second electrode terminal 90 may also be indirectly connected to the second tab 12 through other conductive members, so as to realize the electrical connection between the second electrode terminal 90 and the second tab 12. Exemplarily, the conductive member may be connected to the second tab 12 and the second electrode terminal 90 at the same time, so as to realize the electrical connection between the second electrode terminal 90 and the second tab 12.

The convergence component configured for electrical connection with the second electrode terminal 90 of the battery cell 7 may be referred to as the second convergence component 82 corresponding to the battery cell 7. The second convergence component 82 may be connected to the second electrode terminal 90 by welding, bonding, or other means, so as to realize the electrical connection between the second convergence component 82 and the second electrode terminal 90.

Exemplarily, the first convergence component 81 connects the first electrode terminal 30 of one battery cell 7 and the second electrode terminal 90 of another battery cell 7, while the second convergence component 82 connects the second electrode terminal 90 of the one battery cell 7 and the first electrode terminal 30 of yet another battery cell 7, so that the first convergence component 81 and the second convergence component 82 connect the three battery cells 7 in series.

The first electrode terminal 30 and the second electrode terminal 90 may be used as two output electrodes of the battery cell 7, so as to realize electrical connection between the battery cell 7 and an external circuit.

The second electrode terminal 90 replaces the cover body 22 as the output electrode, which can reduce the welding stress on the cover body 22 and reduce the requirement on the strength of the case 20.

In some embodiments, the second electrode terminal 90 is arranged on the cover body 22.

The first electrode terminal 30 and the second electrode terminal 90 are located at a same end of the battery cell 7, so that the first convergence component 81 and the second convergence component 82 can be assembled to a same side of the battery cell 7. In this way, an assembly process can be simplified, improving efficiency of assembling a plurality of battery cells 7 into a group. The second electrode terminal 90 is arranged on the cover body 22 away from the cover plate 40 to increase a distance between the joint between the cylinder 21 and the cover plate 40 and the second electrode terminal 90, so as to reduce an effect on the joint between the cylinder 21 and the cover plate 40 when the battery cell 7 is subjected to external impact, reduce a risk of failure of the connection between the cover plate 40 and the case 20, reduce leakage of the electrolyte solution, and improve the safety.

In some embodiments, the cover body 22 is further provided with a second electrode lead-out hole. The second electrode terminal 90 is attached to the second electrode lead-out hole.

In some embodiments, both the first electrode terminal 30 and the second electrode terminal 90 protrude from an outer surface of the cover body 22, so as to reduce a risk of interference of the cover body 22 with the convergence component and simplify a connection process of the convergence component and the electrode terminal.

In some embodiments, both the first electrode terminal 30 and the second electrode terminal 90 are insulated from the cover body 22.

In this embodiment, the case 20 may be uncharged, thereby reducing the risk of electric leakage and improving the safety.

In some embodiments, a base material of the case 20 is aluminum. The aluminum case 20 has a lighter weight, which can increase energy density of the battery cell 7. The case 20 is uncharged, so the aluminum case 20 is not easily corroded by the electrolyte solution.

In some embodiments, the electrode assembly 10 further includes a main body portion 13. Both the first tab 11 and the second tab 12 protrude from an end portion of the main body portion 13 facing the cover body 22 to reduce a distance between the first tab 11 and the first electrode terminal 30 and a distance between the second tab 12 and the second electrode terminal 90.

In some embodiments, the first electrode terminal 30 includes a terminal main body 34 and a sealing plate 33. The terminal main body 34 includes the first concave portion 31 and the first connecting portion 32, and the first connecting portion 32 is located on the side of the first concave portion 31 facing the electrode assembly 10. The sealing plate 33 is connected to the terminal main body 34 and seals an opening of the first concave portion 31.

In some alternative embodiments, a through hole for liquid injection may be provided on the cover body 22 or the cover plate 40. Correspondingly, the through hole on the first connecting portion 32 may be omitted. The sealing plate 33 of the first electrode terminal 30 may be retained or omitted.

In some embodiments, the electrode assembly 10 further includes a second tab 12, and polarity of the second tab 12 is opposite to that of the first tab 11. The battery cell 7 further includes a second electrode terminal 90 arranged on the cover body 22. The second electrode terminal 90 includes a second concave portion 91 and a second connecting portion 92 located at the bottom of the second concave portion 91. The second connecting portion 92 is configured to realize electrical connection with the second tab 12 through a second welding portion W2.

In some examples, the second connecting portion 92 may be directly welded to the second tab 12 to form the second welding portion W2. For example, part of the second connecting portion 92 and part of the second tab 12 are melted to form a molten pool, and after the molten pool is solidified, the second welding portion W2 is formed.

In some other alternative examples, the second connecting portion 92 is welded to other components connected to the second tab 12 (e.g., another current collecting member 52) to form the second welding portion W2. For example, part of the second connecting portion 92 and part of the current collecting member 52 are melted to form a molten pool, and after the molten pool is solidified, the second welding portion W2 is formed.

In this embodiment of the present application, the thickness of the second connecting portion 92 is reduced by providing the second concave portion 91 on the second electrode terminal 90, thereby reducing welding power required for welding, reducing heat generation, reducing a risk of burn of other members, and improving the safety. The second welding portion W2 can reduce resistance between the second electrode terminal 90 and the second tab 12, and improve the overcurrent capability.

In some embodiments, the second electrode terminal 90 may adopt a same structure as the first electrode terminal 30. In other words, the second electrode terminal 90 also includes a terminal main body and a sealing plate.

In some embodiments, the battery cell 7 may be a square battery cell. Exemplarily, the cylinder 21 may be a square cylinder.

In some embodiments, the cover body 22 may be rectangular, and the electrode assembly 10 may be flat. The first electrode lead-out hole and the second electrode lead-out hole may be arranged close to two ends of the cover body 22 along its own length direction, respectively.

According to some embodiments of the present application, a battery is further provided, including a plurality of battery cells according to any one of the above embodiments.

According to some embodiments of the present application, an electrical apparatus is further provided, including the battery according to any one of the above embodiments. The battery is configured to provide electric energy for the electrical apparatus. The electrical apparatus may be any of the aforementioned apparatuses or systems to which the battery cell is applied.

As shown in Fig. 4 to Fig. 10, according to some embodiments of the present application, a cylindrical battery cell 7 is provided. The battery cell 7 includes an electrode assembly 10, a case 20, a first electrode terminal 30, a current collecting member 50, and a cover plate 40. The case 20 includes a cylinder 21 and a cover body 22 that are integrally formed, and the cylinder 21 has an opening 211 at the end facing away from the cover body 22. The electrode assembly 10 is accommodated in the case 20 and includes a first tab 11 and a second tab 12. Polarity of the second tab 12 is opposite to that of the first tab 11. The first tab 11 is arranged at the end of the electrode assembly 10 facing the cover body 22, and the second tab 12 is arranged at the end of the electrode assembly 10 facing the cover plate 40.

The cover plate 40 is connected to the cylinder 21 and covers the opening. The cover body 22 is electrically connected to the second tab 12 through the cylinder 21.

The first electrode terminal 30 includes a terminal main body 34 and a sealing plate 33. The terminal main body 34 includes a first concave portion 31 and a first connecting portion 32 located at the bottom of the first concave portion 31. The current collecting member 50 is welded to the first tab 11 and the first connecting portion 32 to electrically connect the terminal main body 34 and the first tab 11. At least part of the sealing plate 33 is accommodated in the first concave portion 31 and seals the opening of the first concave portion 31. The sealing plate 33 is welded to the terminal main body 34.

It should be noted that in case of no conflicts, the embodiments in the present application and the features in the embodiments may be combined with each other.

Finally, it should be noted that the above embodiments are merely used for illustrating rather than limiting the technical solutions of the present application. Although the present application has been described in detail with reference to the above embodiments, those of ordinary skill in the art should understand that the technical solutions recorded in the above embodiments can still be modified, or some of the technical features therein can be equivalently replaced.

## Claims

1. A battery cell (7), comprising:
a case (20) comprising a cylinder (21) and a cover body (22) that are integrally formed, the cylinder (21) having an opening (211) at the end facing away from the cover body (22);
an electrode assembly (10) accommodated in the case (20) and comprising a first tab (11);
a first electrode terminal (30) arranged on the cover body (22) and configured for electrical connection with the first tab (11); and
a cover plate (40) connected to the cylinder (21) and covering the opening (211);
wherein the first electrode terminal (30) is configured for connection with a first convergence component (81) of a battery (2);
wherein the electrode assembly (10) further comprises a second tab (12), the polarity of the second tab (12) being opposite to that of the first tab (11); and
the cover body (22) is electrically connected to the second tab (12), and the cover body (22) is configured for connection with a second convergence component (82) of the battery (2);
wherein the first tab (11) is arranged at the end of the electrode assembly (10) facing the cover body (22), and the second tab (12) is arranged at the end of the electrode assembly (10) facing the cover plate (40); and
the cover body (22) is electrically connected to the second tab (12) through the cylinder (21);
the first electrode terminal (30) is arranged on the cover body (22) in an insulating manner, the first electrode terminal (30) and the cover body (22) may have different polarity, and the first electrode terminal (30) and the cover body (22) are used as different output electrodes;
wherein the cover body (22) comprises a body portion (2221) and a bending portion (223), the bending portion (223) being integrally connected to the cylinder (21) and the body portion (2221);
wherein a thickness of the body portion (2221) is greater than a wall thickness of the cylinder (21);the second convergence component (82) is connected to the body portion (2221) by welding, bonding, or other means, so as to realize the electrical connection between the second convergence component (82) and the cover body (22).

2. The battery cell (7) according to claim 1, wherein the cover plate (40) is welded to the cylinder (21);

3. The battery cell (7) according to claim 1, wherein the cover plate (40) is in sealing connection with the cylinder (21) through a sealing member (70).

4. The battery cell (7) according to any one of claims 1 to 3,
wherein the second tab (12) is a negative tab, and a base material of the case (20) is steel.

5. The battery cell (7) according to any preceding claim, wherein the cover body (22) comprises an accommodating concave portion (2222) recessed from an outer surface (222b) of the body portion (2221) in a direction facing the electrode assembly (10); and
a bottom wall of the accommodating concave portion (2222) is provided with a first electrode lead-out hole (221), and the first electrode terminal (30) is mounted in the first electrode lead-out hole (221);
and/or, wherein the thickness D1 of the body portion (2221) and the wall thickness D2 of the cylinder (21) satisfy: 0.1 mm≤D1-D2≤2 mm.

6. The battery cell (7) according to any one of claims 1 to 5, wherein the first electrode terminal (30) comprises a first concave portion (31) and a first connecting portion (32) located at the bottom of the first concave portion (31); and
the first connecting portion (32) is configured to realize electrical connection with the first tab (11) through a first welding portion (W1);
optionally, wherein the first connecting portion (32) is welded to the first tab (11) to form the first welding portion (W1);
or, further comprising a current collecting member (50) connected to the first tab (11);
wherein the first connecting portion (32) is welded to the current collecting member (50) to form the first welding portion (W1).

7. The battery cell (7) according to claim 6, wherein the first electrode terminal (30) comprises a terminal main body (34) and a sealing plate (33), the terminal main body (34) comprises the first concave portion (31) and the first connecting portion (32), and the first connecting portion (32) is located on the side of the first concave portion (31) facing the electrode assembly (10); and
the sealing plate (33) is connected to the terminal main body (34) and seals an opening of the first concave portion (31).

8. The battery cell (7) according to claim 7, wherein a gap is provided between the sealing plate (33) and the first connecting portion (32); and/or
wherein at least part of the sealing plate (33) is accommodated in the first concave portion (31), optionally, wherein the sealing plate (33) protrudes from the surface of the terminal main body (34) facing away from the electrode assembly (10).

9. the battery cell (7) according to any one of claims 6 to 8, wherein the first connecting portion (32) is provided with a through hole (323) for injecting an electrolyte solution;
and/or, wherein
the electrode assembly (10) further comprises a second tab (12), the polarity of the second tab (12) being opposite to that of the first tab (11);
the battery cell (7) further comprises a second electrode terminal (90) arranged on the cover body (22), the second electrode terminal (90) comprising a second concave portion (91) and a second connecting portion (92) located at the bottom of the second concave portion (91); and
the second connecting portion (92) is configured to realize electrical connection with the second tab (12) through a second welding portion (W2).

## Patentansprüche

1. Batteriezelle (7), umfassend:
ein Gehäuse (20), umfassend einen Zylinder (21) und einen Abdeckungskörper (22), die einstückig ausgebildet sind, wobei der Zylinder (21) eine Öffnung (211) an dem von dem Abdeckungskörper (22) abgewandten Ende aufweist;
eine Elektrodenbaugruppe (10), die in dem Gehäuse (20) aufgenommen ist und eine erste Lasche (11) umfasst;
einen ersten Elektrodenanschluss (30), der an dem Abdeckungskörper (22) angeordnet und für eine elektrische Verbindung mit der ersten Lasche (11) konfiguriert ist; und
eine Abdeckplatte (40), die mit dem Zylinder (21) verbunden ist und die Öffnung (211) abdeckt;
wobei der erste Elektrodenanschluss (30) für eine Verbindung mit einer ersten Konvergenzkomponente (81) einer Batterie (2) konfiguriert ist;
wobei die Elektrodenbaugruppe (10) ferner eine zweite Lasche (12) umfasst, wobei die Polarität der zweiten Lasche (12) derjenigen der ersten Lasche (11) entgegengesetzt ist; und
der Abdeckungskörper (22) elektrisch mit der zweiten Lasche (12) verbunden ist, und der Abdeckungskörper (22) für eine Verbindung mit einer zweiten Konvergenzkomponente (82) der Batterie (2) konfiguriert ist;
wobei die erste Lasche (11) an dem Ende der Elektrodenbaugruppe (10), das dem Abdeckungskörper (22) zugewandt ist, angeordnet ist und die zweite Lasche (12) an dem Ende der Elektrodenbaugruppe (10), das der Abdeckplatte (40) zugewandt ist, angeordnet ist; und
der Abdeckungskörper (22) über den Zylinder (21) elektrisch mit der zweiten Lasche (12) verbunden ist;
der erste Elektrodenanschluss (30) isolierend auf dem Abdeckungskörper (22) angeordnet ist, der erste Elektrodenanschluss (30) und der Abdeckungskörper (22) unterschiedliche Polarität aufweisen können und der erste Elektrodenanschluss (30) und der Abdeckungskörper (22) als unterschiedliche Ausgangselektroden verwendet werden;
wobei der Abdeckungskörper (22) einen Körperabschnitt (2221) und einen Biegeabschnitt (223) umfasst, wobei der Biegeabschnitt (223) einstückig mit dem Zylinder (21) und dem Körperabschnitt (2221) verbunden ist;
wobei eine Dicke des Körperabschnitts (2221) größer ist als eine Wanddicke des Zylinders (21); die zweite Konvergenzkomponente (82) mit dem Körperabschnitt (2221) durch Schweißen, Kleben oder andere Mittel verbunden ist, um die elektrische Verbindung zwischen der zweiten Konvergenzkomponente (82) und dem Abdeckungskörper (22) zu realisieren.

2. Batteriezelle (7) nach Anspruch 1, wobei die Abdeckplatte (40) mit dem Zylinder (21) verschweißt ist.

3. Batteriezelle (7) nach Anspruch 1, wobei die Abdeckplatte (40) über ein Dichtungselement (70) in dichtender Verbindung mit dem Zylinder (21) steht.

4. Batteriezelle (7) nach einem der Ansprüche 1 bis 3, wobei die zweite Lasche (12) eine negative Lasche ist, und ein Basismaterial des Gehäuses (20) Stahl ist.

5. Batteriezelle (7) nach einem der vorstehenden Ansprüche, wobei der Abdeckungskörper (22) einen aufnehmenden konkaven Abschnitt (2222) umfasst, der von einer Außenoberfläche (222b) des Körperabschnitts (2221) in einer Richtung zur Elektrodenbaugruppe (10) hin ausgespart ist; und
eine untere Wand des aufnehmenden konkaven Abschnitts (2222) mit einem ersten Elektrodenausgangsloch (221) versehen ist, und der erste Elektrodenanschluss (30) in dem ersten Elektrodenausgangsloch (221) montiert ist;
und/oder, wobei die Dicke D1 des Körperabschnitts (2221) und die Wanddicke D2 des Zylinders (21) erfüllen: 0,1 mm≤D1-D2≤2 mm.

6. Batteriezelle (7) nach einem der Ansprüche 1 bis 5, wobei der erste Elektrodenanschluss (30) einen ersten konkaven Abschnitt (31) und einen ersten Verbindungsabschnitt (32) umfasst, der sich am Boden des ersten konkaven Abschnitts (31) befindet; und
der erste Verbindungsabschnitt (32) konfiguriert ist, um eine elektrische Verbindung mit der ersten Lasche (11) durch einen ersten Schweißabschnitt (W1) zu realisieren;
optional, wobei der erste Verbindungsabschnitt (32) mit der ersten Lasche (11) verschweißt ist, um den ersten Schweißabschnitt (W1) zu bilden;
oder ferner umfassend ein Stromabnehmerelement (50), das mit der ersten Lasche (11) verbunden ist;
wobei der erste Verbindungsabschnitt (32) mit dem Stromabnehmerelement (50) verschweißt ist, um den ersten Schweißabschnitt (W1) zu bilden.

7. Batteriezelle (7) nach Anspruch 6, wobei der erste Elektrodenanschluss (30) einen Anschlusshauptkörper (34) und eine Dichtungsplatte (33) umfasst, der Anschlusshauptkörper (34) den ersten konkaven Abschnitt (31) und den ersten Verbindungsabschnitt (32) umfasst, und der erste Verbindungsabschnitt (32) sich auf der Seite des ersten konkaven Abschnitts (31), die der Elektrodenbaugruppe (10) zugewandt ist, befindet; und
die Dichtungsplatte (33) mit dem Anschlusshauptkörper (34) verbunden ist und eine Öffnung des ersten konkaven Abschnitts (31) abdichtet.

8. Batteriezelle (7) nach Anspruch 7, wobei ein Spalt zwischen der Dichtungsplatte (33) und dem ersten Verbindungsabschnitt (32) bereitgestellt ist; und/oder
wobei mindestens ein Teil der Dichtungsplatte (33) in dem ersten konkaven Abschnitt (31) aufgenommen ist, optional, wobei die Dichtungsplatte (33) von der Oberfläche des Anschlusshauptkörpers (34), die von der Elektrodenbaugruppe (10) abgewandt ist, vorsteht.

9. Batteriezelle (7) nach einem der Ansprüche 6 bis 8, wobei der erste Verbindungsabschnitt (32) mit einem Durchgangsloch (323) zum Einspritzen einer Elektrolytlösung versehen ist;
und/oder, wobei
die Elektrodenbaugruppe (10) ferner eine zweite Lasche (12) umfasst, wobei die Polarität der zweiten Lasche (12) derjenigen der ersten Lasche (11) entgegengesetzt ist;
die Batteriezelle (7) ferner einen zweiten Elektrodenanschluss (90) umfasst, der auf dem Abdeckungskörper (22) angeordnet ist, wobei der zweite Elektrodenanschluss (90) einen zweiten konkaven Abschnitt (91) und einen zweiten Verbindungsabschnitt (92) umfasst, der sich am Boden des zweiten konkaven Abschnitts (91) befindet; und
der zweite Verbindungsabschnitt (92) konfiguriert ist, um eine elektrische Verbindung mit der zweiten Lasche (12) durch einen zweiten Schweißabschnitt (W2) zu realisieren.

## Revendications

1. Cellule de batterie (7), comprenant :
un boîtier (20) comprenant un cylindre (21) et un corps de couvercle (22) qui sont formés d'un seul tenant, le cylindre (21) ayant une ouverture (211) au niveau de l'extrémité orientée à l'opposé du corps de couvercle (22) ;
un ensemble électrode (10) logé dans le boîtier (20) et comprenant une première patte (11) ;
une première borne d'électrode (30) agencée sur le corps de couvercle (22) et conçue pour être en connexion électrique avec la première patte (11) ; et
une plaque de couvercle (40) raccordée au cylindre (21) et couvrant l'ouverture (211) ;
dans laquelle la première borne d'électrode (30) est conçue pour une connexion avec un premier élément de convergence (81) d'une batterie (2) ;
dans laquelle l'ensemble électrode (10) comprend en outre une deuxième patte (12), la polarité de la deuxième patte (12) étant opposée à celle de la première patte (11) ; et
le corps de couvercle (22) est électriquement connecté à la deuxième patte (12), et le corps de couvercle (22) est conçu pour une connexion avec un deuxième composant de convergence (82) de la batterie (2) ;
dans laquelle la première patte (11) est agencée à l'extrémité de l'ensemble électrode (10) qui fait face au corps de couvercle (22), et la deuxième patte (12) est agencée à l'extrémité de l'ensemble électrode (10) qui fait face à la plaque de couvercle (40) ; et
le corps de couvercle (22) est électriquement connecté à la deuxième patte (12) à travers le cylindre (21) ;
la première borne d'électrode (30) est agencée sur le corps de couvercle (22) de manière isolante, la première borne d'électrode (30) et le corps de couvercle (22) peuvent avoir une polarité différente, et la première borne d'électrode (30) et le corps de couvercle (22) sont utilisés comme des électrodes de sortie différentes ;
dans laquelle le corps de couvercle (22) comprend une partie corps (2221) et une partie coudée (223), la partie coudée (223) étant connectée d'un seul tenant au cylindre (21) et à la partie corps (2221) ;
dans laquelle une épaisseur de la partie corps (2221) est supérieure à une épaisseur de paroi du cylindre (21) ; le deuxième élément de convergence (82) est connecté à la partie corps (2221) par soudage, collage, ou un autre moyen, de sorte à former la connexion électrique entre le deuxième composant de convergence (82) et le corps de couvercle (22).

2. Cellule de batterie (7) selon la revendication 1, dans laquelle la plaque de couvercle (40) est soudée au cylindre (21).

3. Cellule de batterie (7) selon la revendication 1, dans laquelle la plaque de couvercle (40) est en connexion étanche avec le cylindre (21) par l'intermédiaire d'un élément d'étanchéité (70).

4. Cellule de batterie (7) selon l'une quelconque des revendications 1 à 3, dans laquelle la deuxième patte (12) est une patte négative, et un matériau de base du boîtier (20) est un acier.

5. Cellule de batterie (7) selon l'une quelconque des revendications précédentes, dans laquelle le corps de couvercle (22) comprend une partie concave de réception (2222) en creux par rapport à une surface externe (222b) de la partie corps (2221) dans une direction qui fait face à l'ensemble électrode (10) ; et
une paroi de fond de la partie concave de réception (2222) est pourvue d'un premier trou de sortie de conducteur d'électrode (221), et la première borne d'électrode (30) est montée dans le premier trou de sortie de conducteur d'électrode (221) ;
et/ou, dans laquelle l'épaisseur D1 de la partie corps (2221) et l'épaisseur de paroi D2 du cylindre (21) satisfont : 0,1 mm ≤ D1-D2 ≤ 2 mm.

6. Cellule de batterie (7) selon l'une quelconque des revendications 1 à 5,
dans laquelle la première borne d'électrode (30) comprend une première partie concave (31) et une première partie de connexion (32) située à la base de la première partie concave (31) ; et
la première partie de connexion (32) est conçue pour effectuer une connexion électrique avec la première patte (11) par l'intermédiaire d'une première partie de soudage (W1) ;
éventuellement, dans laquelle la première partie de connexion (32) est soudée à la première patte (11) pour former la première partie de soudage (W1) ;
ou, comprenant en outre un élément de collecte de courant (50) connecté à la première patte (11) ;
dans laquelle la première partie de connexion (32) est soudée à l'élément de collecte de courant (50) pour former la première partie de soudage (W1).

7. Cellule de batterie (7) selon la revendication 6,
dans laquelle la première borne d'électrode (30) comprend un corps principal de borne (34) et une plaque d'étanchéité (33), le corps principal de borne (34) comprend la première partie concave (31) et la première partie de connexion (32), et la première partie de connexion (32) est située sur le côté de la première partie concave (31) qui fait face à l'ensemble électrode (10) ; et
la plaque d'étanchéité (33) est connectée au corps principal de borne (34) et assure l'étanchéité d'une ouverture de la première partie concave (31).

8. Cellule de batterie (7) selon la revendication 7,
dans laquelle un espace est ménagé entre la plaque d'étanchéité (33) et la première partie de connexion (32) ; et/ou
dans laquelle au moins une partie de la plaque d'étanchéité (33) est reçue dans la première partie concave (31), éventuellement, dans laquelle la plaque d'étanchéité (33) fait saillie depuis la surface du corps principal de borne (34) qui est orienté à l'opposé de l'ensemble électrode (10).

9. Cellule de batterie (7) selon l'une quelconque des revendications 6 à 8,
dans laquelle la première partie de connexion (32) est pourvue d'un trou traversant (323) destiné à l'injection d'une solution d'électrolyte ;
et/ou, dans laquelle
l'ensemble électrode (10) comprend en outre une deuxième patte (12), la polarité de la deuxième patte (12) étant opposée à celle de la première patte (11) ;
la cellule de batterie (7) comprend en outre une deuxième borne d'électrode (90) agencée sur le corps de couvercle (22), la deuxième borne d'électrode (90) comprenant une deuxième partie concave (91) et une deuxième partie de connexion (92) située à la base de la deuxième partie concave (91) ; et
la deuxième partie de connexion (92) est conçue pour effectuer une connexion électrique avec la deuxième patte (12) par l'intermédiaire d'une deuxième partie de soudage (W2).
